(19) Europäisches Patentamt / European Patent Office / Office européen des brevets

(11) **EP 4 365 974 A2**

(12) **EUROPEAN PATENT APPLICATION**

(43) Date of publication:
**08.05.2024 Bulletin 2024/19**

(21) Application number: **23199809.7**

(22) Date of filing: **26.09.2023**

(51) International Patent Classification (IPC):
$H01M\ 4/13$ (2010.01)    $H01M\ 4/66$ (2006.01)
$H01M\ 4/80$ (2006.01)    $H01M\ 10/052$ (2010.01)
$H01M\ 10/0568$ (2010.01)    $H01M\ 10/0569$ (2010.01)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.11.2022 JP 2022177510**

(71) Applicant: **TOYOTA JIDOSHA KABUSHIKI KAISHA**
**Toyota-shi, Aichi-ken, 471-8571 (JP)**

(72) Inventor: **MATSUNOBU, Kohei**
**Aichi-ken, 471-8571 (JP)**

(74) Representative: **D Young & Co LLP**
**3 Noble Street**
**London EC2V 7BQ (GB)**

(54) **LITHIUM METAL SECONDARY BATTERY AND METHOD OF CHARGING AND DISCHARGING THE SAME**

(57)    A lithium metal secondary battery (100) comprises a positive electrode (10), a negative electrode (20), and an electrolyte. The negative electrode (20) includes a negative electrode current collector (21) and a porous body (22). The porous body (22) is placed on the surface of the negative electrode current collector (21). The porous body (22) includes an electrically-insulating skeleton (1). The electrically-insulating skeleton (1) is contiguous in mesh form. Gaps in the electrically-insulating skeleton (1) form pores (2). Li ions are dissolved in the electrolyte. A charging reaction of the negative electrode (20) is a deposition reaction of a Li metal (5) occurring in the pores (2). A discharging reaction of the negative electrode (20) is a dissolution reaction of the Li metal (5) occurring in the pores (2).

FIG.1  100

EP 4 365 974 A2

**Description**

CROSS REFERENCE TO RELATED APPLICATIONS

This nonprovisional application is based on Japanese Patent Application No. 2022-177510 filed on November 4, 2022, with the Japan Patent Office, the entire contents of which are hereby incorporated by reference.

BACKGROUND

Field

The present disclosure relates to a lithium metal secondary battery and a method of charging and discharging the same.

Description of the Background Art

Japanese Patent Laying-Open No. 2001-250559 discloses a lithium metal secondary battery.

SUMMARY

In a lithium metal secondary battery (hereinafter also called "a cell"), a charging reaction of the negative electrode is a deposition reaction of Li metal. As Li metal is deposited, the thickness of the negative electrode increases. As the thickness of the negative electrode increases, the cell may expand. Hence, an object of the present disclosure is to reduce expansion of a cell that can take place concomitantly with Li metal deposition.

Hereinafter, the technical configuration and effects of the present disclosure will be described. It should be noted that the action mechanism according to the present specification includes presumption. The action mechanism does not limit the technical scope of the present disclosure.

1. A lithium metal secondary battery comprises a positive electrode, a negative electrode, and an electrolyte. The negative electrode includes a negative electrode current collector and a porous body. The porous body is placed on a surface of the negative electrode current collector. The porous body includes an electrically-insulating skeleton. The electrically-insulating skeleton is contiguous in mesh form. Gaps in the electrically-insulating skeleton form pores. Lithium ions are dissolved in the electrolyte. A charging reaction of the negative electrode is a deposition reaction of lithium metal occurring in the pores. A discharging reaction of the negative electrode is a dissolution reaction of the lithium metal occurring in the pores.

In the cell according to "1" above, the negative electrode includes a porous body. The porous body is a framework, in other words. Li metal deposition occurs in the pores of the porous body. It is conceivable that Li metal deposition within the pores is less likely to cause a change in the contour dimensions of the porous body (framework). Hence, as a result of Li metal deposition occurring only inside the framework, an increase in the thickness of the negative electrode may be reduced. That is, expansion of the cell that can take place concomitantly with Li metal deposition is expected to be reduced.

It should be noted that the skeleton of the porous body is electrically insulating. If the skeleton of the porous body is electrically conductive, cell expansion may not be reduced, for the following reason. If the skeleton is electrically conductive, electrons may be supplied throughout the porous body. Then, at the surface of the porous body (which is an area that is the closest to the positive electrode), Li ions can receive electrons to become Li metal to be deposited. During charging, the Li metal may grow toward the positive electrode. That is, the Li metal may spread in a direction away from the porous body. Due to this, it is conceivable to be difficult to contain the Li metal within the porous body (framework). As examples of a porous body having an electrically-conductive skeleton, a metal porous body, a metal foam, and the like may be mentioned.

When the skeleton of the porous body is electrically insulating, at the start of charging, Li ions may receive electrons at the surface of the negative electrode current collector and Li metal may be deposited there. When Li metal deposition starts at the surface of the negative electrode current collector, Li metal may spread inside the porous body during charging.

2. In the lithium metal secondary battery according to "1" above, the electrically-insulating skeleton may include at least one selected from the group consisting of polyimide, polyamide-imide, and polyamide.

The skeleton of the porous body may be formed of resin material, for example. Polyimide (PI), polyamide-imide (PAI), and polyamide (PA), for example, may have a preferable degree of strength to form the skeleton. When the skeleton is formed of PI and/or the like, breakage of the skeleton due to Li metal deposition may be reduced, for example.

3. In the lithium metal secondary battery according to "1" or "2" above, the electrically-insulating skeleton may include oxide glass, for example.

The skeleton of the porous body may be formed of oxide glass, for example. Oxide glass may have a preferable degree of strength to form the skeleton. When the skeleton is formed of oxide glass, breakage of the skeleton due to Li metal deposition may be reduced, for example.

4. In the lithium metal secondary battery according to any one of" 1" to "3 " above, the porous body may have an average pore size of 1 $\mu$m or more, for example.

When the average pore size of the porous body is 1 $\mu$m or more, Li metal that is deposited on the surface of the negative electrode current collector tends to enter into the pores of the porous body.

5. In the lithium metal secondary battery according to any one of "1" to "4" above, the porous body may have a porosity from 50 to 80%, for example.

When the porous body has a porosity from 50 to 80%, the balance between the skeleton strength and the Li-filling amount (negative electrode capacity) tends to be good, for example.

6. In the lithium metal secondary battery according to any one of" 1" to "5" above, the electrolyte may include a solvent and a solute, for example. The solvent may include a hydrofluoroether (HFE), for example. The solute may include an imide salt, for example.

When the electrolyte includes HFE and an imide salt, battery power output is expected to be enhanced, for example.

7. A method of charging and discharging a lithium metal secondary battery comprises the following (a) and (b):

(a) charging a lithium metal secondary battery; and
(b) discharging the lithium metal secondary battery.

The lithium metal secondary battery comprises a positive electrode, a negative electrode, and an electrolyte. The negative electrode includes a negative electrode current collector and a porous body. The porous body is placed on a surface of the negative electrode current collector. The porous body includes an electrically-insulating skeleton. The electrically-insulating skeleton is contiguous in mesh form. Gaps in the electrically-insulating skeleton form pores. Lithium ions are dissolved in the electrolyte.

The above (a) includes deposition of a lithium metal in the pores.

The above (b) includes dissolution of the lithium metal present in the pores into the electrolyte.

8. In the method of charging and discharging a lithium metal secondary battery according to "7" above, the porous body may have a first main face and a second main face. The second main face is located opposite to the first main face. The first main face is in contact with the negative electrode current collector.

In the above (a), the lithium metal starts to be deposited at the first main face. In a direction heading from the first main face toward the second main face, sequentially from the pores close to the first main face, the lithium metal fills the pores. Charging completes by the time when the lithium metal reaches the second main face.

Next, an embodiment of the present disclosure (which may also be simply called "the present embodiment" hereinafter) and an example of the present disclosure (which may also be simply called "the present example" hereinafter) will be described. It should be noted that neither the present embodiment nor the present example limits the technical scope of the present disclosure. The present embodiment and the present example are illustrative in any respect. The present embodiment and the present example are non-restrictive. The technical scope of the present disclosure encompasses any modifications within the meaning and the scope equivalent to the terms of the claims. For example, it is originally planned that certain configurations of the present embodiment and the present example can be optionally combined.

The foregoing and other objects, features, aspects and advantages of the present disclosure will become more apparent from the following detailed description of the present disclosure when taken in conjunction with the accompanying drawings.

BRIEF DESCRIPTION OF THE DRAWINGS

Fig. 1 is a conceptual view illustrating an example of a lithium metal secondary battery according to the present embodiment.
Fig. 2 is a table showing a first cell configuration.
Fig. 3 is a table showing a second cell configuration.
Fig. 4 is a table showing a third cell configuration.

Fig. 5 is a schematic flowchart illustrating a method of charging and discharging according to the present embodiment.

Fig. 6 is a conceptual view illustrating a deposition behavior according to the present embodiment.

Fig. 7 is a conceptual view illustrating a battery system according to the present embodiment.

Fig. 8 is a table showing cell configurations and evaluation results.

Fig. 9 is a conceptual view illustrating the deposition behavior of No. 1.

Fig. 10 is a conceptual view illustrating the deposition behavior of No. 2.

Fig. 11 is a conceptual view illustrating the deposition behavior of No. 3.

DESCRIPTION OF THE PREFERRED EMBODIMENTS

1. Terms and Definitions Thereof, etc.

Expressions such as "comprise", "include", and "have", and other similar expressions (such as "be composed of", for example) are open-ended expressions. In an open-ended expression, in addition to an essential component, an additional component may or may not be further included. The expression "consist of" is a closed-end expression. However, even when a closed-end expression is used, impurities present under ordinary circumstances as well as an additional element irrelevant to the technique according to the present disclosure are not excluded. The expression "consist essentially of" is a semiclosed-end expression. A semiclosed-end expression tolerates addition of an element that does not substantially affect the fundamental, novel features of the technique according to the present disclosure.

Expressions such as "may" and "can" are not intended to mean "must" (obligation) but rather mean "there is a possibility" (tolerance).

Regarding a plurality of steps, operations, processes, and the like that are included in various methods, the order for implementing those things is not limited to the described order, unless otherwise specified. For example, a plurality of steps may proceed simultaneously. For example, a plurality of steps may be implemented in reverse order.

A singular form also includes its plural meaning, unless otherwise specified. For example, "a particle" may mean not only "one particle" but also "a plurality of particles (a particle group)" and "a group of particles (powder)".

Any geometric term (such as "parallel", "vertical", and "orthogonal", for example) should not be interpreted solely in its exact meaning. For example, "parallel" may mean a geometric state that is deviated, to some extent, from exact "parallel". Any geometric term herein may include tolerances and/or errors in terms of design, operation, production, and/or the like. The dimensional relationship in each figure may not necessarily coincide with the actual dimensional relationship. The dimensional relationship (in length, width, thickness, and the like) in each figure may have been changed for the purpose of assisting understanding for the readers. Further, a part of a given configuration may have been omitted.

A numerical range such as "from m to n%" includes both the upper limit and the lower limit, unless otherwise specified. That is, "from m to n%" means a numerical range of "not less than m% and not more than n%". Moreover, "not less than m% and not more than n%" includes "more than m% and less than n%". Further, any numerical value selected from a certain numerical range may be used as a new upper limit or a new lower limit. For example, any numerical value from a certain numerical range may be combined with any numerical value described in another location of the present specification or in a table or a drawing to set a new numerical range.

All the numerical values are regarded as being modified by the term "about". The term "about" may mean $\pm 5\%$, $\pm 3\%$, $\pm 1\%$, and/or the like, for example. Each numerical value may be an approximate value that can vary depending on the implementation configuration of the technique according to the present disclosure. Each numerical value may be expressed in significant figures. Unless otherwise specified, each measured value may be the average value obtained from multiple measurements performed. The number of measurements may be 3 or more, or may be 5 or more, or may be 10 or more. Generally, the greater the number of measurements is, the more reliable the average value is expected to be. Each measured value may be rounded off based on the number of the significant figures. Each measured value may include an error occurring due to an identification limit of the measurement apparatus, for example.

A stoichiometric composition formula represents a typical example of a compound. A compound may have a non-stoichiometric composition. For example, "$Al_2O_3$" is not limited to a compound where the ratio of the amount of substance is "Al/O=2/3". "$Al_2O_3$" represents a compound that includes Al and O in any composition ratio, unless otherwise specified. Further, the compound may be doped with a trace element, or some of Al and/or O may be replaced by another element, for example.

"Derivative" refers to a compound that is derived from its original compound by at least one partial modification selected from the group consisting of functional group introduction, atom replacement, oxidation, reduction, and other chemical reactions. The position of modification may be one position, or may be a plurality of positions. "Substituent" may include, for example, at least one selected from the group consisting of alkyl group, alkenyl group, alkynyl group, cycloalkyl group, unsaturated cycloalkyl group, aromatic group, heterocyclic group, halogen atom (F, Cl, Br, I, etc.), OH group, SH group, CN group, SCN group, OCN group, nitro group, alkoxy group, unsaturated alkoxy group, amino group, alkylamino group, dialkylamino group, aryloxy group, acyl group, alkoxycarbonyl group, acyloxy group, aryloxycarbonyl group, acylamino group, alkoxycarbonylamino group, aryloxy carbonylamino group, sulfonylamino group, sulfamoyl group, carbamoyl group, alkylthio group, arylthio group, sulfonyl group, sulfinyl group, ureido group, phosphoramide group, sulfo group, carboxy group, hydroxamic acid group, sulfino group, hydrazino group, imino group, silyl group, and the like. These substituents may be further substituted. When there are two or more substituents, these substituents may be the same as one another or may be different from each other. A plurality of substituents may be bonded together to form a ring.

"Average pore size (average pore diameter)" of a porous body may be measured by mercury porosimetry. More specifically, a mercury porosimeter is used to measure the total pore volume and the specific surface area of the porous body. By the following equation, the average pore size is determined.

$$\varphi = 4v/A$$

$\varphi$: Average pore size
$v$: Total pore volume
$A$: Specific surface area
"Porosity" of a porous body is measured by the procedure described below.

From the porous body, a sample of a certain size is cut out. For example, a hole punch and/or the like may be used. The mass and the thickness of the sample are measured. From the area and the thickness of the sample, the volume of the sample is calculated. From the mass and the volume of the sample, the apparent density is calculated. By the following equation, the porosity is determined.

$$\text{Porosity } (\%) = \{1 - (\rho/\rho_0)\} \times 100$$

$\rho$: Apparent density of sample
$\rho_0$: True density of skeleton material

2. Lithium Metal Secondary Battery

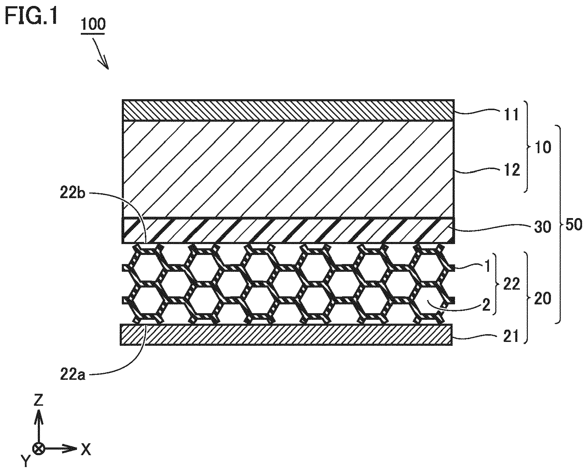

Fig. 1 is a conceptual view illustrating an example of a lithium metal secondary battery according to the present embodiment. A cell 100 includes a power generation element 50 and an electrolyte (not illustrated).

2-1. Exterior Package

Cell 100 may include an exterior package (not illustrated). The exterior package may accommodate power generation element 50 and the electrolyte. The exterior package may have any configuration. The exterior package may be a case made of metal, or may be a pouch made of a metal foil laminated film, for example. The case may have any shape. The case may be cylindrical, prismatic, flat, coin-shaped, and/or the like, for example. The exterior package may include Al and/or the like, for example. The exterior package may accommodate a single power generation element 50, or may accommodate a plurality of power generation elements 50, for example. The plurality of power generation elements 50 may form a series circuit, or may form a parallel circuit, for example. Inside the exterior package, the plurality of power generation elements 50 may be stacked in the thickness direction of cell 100.

2-2. Power Generation Element

Power generation element 50 includes a positive electrode 10 and a negative electrode 20. Power generation element 50 may further include a separator 30. Separator 30 is interposed between positive electrode 10 and negative electrode 20. Power generation element 50 may have any configuration. For example, power generation element 50 may be a stack-type one. For example, positive electrode 10 and negative electrode 20 may be alternately stacked with separator 30 interposed between positive electrode 10 and negative electrode 20 to form power generation element 50. For example, power generation element 50 may be a wound-type one. For example, positive electrode 10 having a belt-like shape, separator 30 having a belt-like shape, and negative electrode 20 having a belt-like shape may be stacked to form a stacked body. The resulting stacked body may be wound spirally to form power generation element 50. After being wound, the wound power generation element 50 may be shaped into a flat form.

Power generation element 50 may have an anode-free structure, for example. The "anode-free structure" refers to a structure in which no solid negative electrode active material is present before initial charging. It would be obvious that power generation element 50 may not have the anode-free structure.

2-3. Negative Electrode

Negative electrode 20 may be in sheet form, for example. Negative electrode 20 includes a negative electrode current collector 21 and a porous body 22. Negative electrode current collector 21 is electrically conductive. Negative electrode current collector 21 supports porous body 22. Negative electrode current collector 21 may be in sheet form, for example. Negative electrode current collector 21 may have a thickness from 5 to 50 $\mu$m, for example. Negative electrode current collector 21 may include a metal foil and/or the like, for example. Negative electrode current collector 21 may include, for example, at least one selected from the group consisting of Cu, Ni, Fe, Zn, Pb, Ag, and Au. Negative electrode current collector 21 may include a Cu foil, a Cu alloy foil, and/or the like, for example.

2-3-1. Porous Body

Porous body 22 is placed on the surface of negative electrode current collector 21. Porous body 22 may be placed on only one side of negative electrode current collector 21. Porous body 22 may be placed on both sides of negative electrode current collector 21. For example, porous body 22 may be simply in contact with the surface of negative electrode current collector 21. For example, porous body 22 may be interposed between positive electrode 10 (separator 30) and negative electrode current collector 21. For example, porous body 22 may be adhered to negative electrode current collector 21. For example, porous body 22 may be welded to negative electrode current collector 21. Porous body 22 may have any contour. Porous body 22 may be in layer form, in film form, in sheet form, and/or the like, for example. Porous body 22 may have a thickness from 10 to 5000 $\mu$m, or from 50 to 1000 $\mu$m, or from 50 to 500 $\mu$m, for example.

Porous body 22 has a first main face 22a and a second main face 22b. Second main face 22b is located opposite to first main face 22a. First main face 22a is in contact with negative electrode current collector 21. Second main face 22b faces positive electrode 10. Second main face 22b may be in contact with separator 30, for example. Second main face 22b may be in contact with positive electrode 10, for example.

Porous body 22 includes an electrically-insulating skeleton 1. Gaps in electrically-insulating skeleton 1 form pores 2. Inside the pores 2, a charge-discharge reaction (a dissolution-deposition reaction of Li metal) may proceed.

2-3-1-1. Pores

Porous body 22 may have an average pore size of 1 $\mu$m or more, for example. When the average pore size of porous body 22 is 1 $\mu$m or more, Li metal deposited on the surface of negative electrode current collector 21 tends to enter into pores 2 of porous body 22. The average pore size may be 2 $\mu$m or more, or may be 2.5 $\mu$m or more, or may be 10 $\mu$m or more, for example. The average pore size may be 100 $\mu$m or less, or may be 50 $\mu$m or less, or may be 10 $\mu$m or less, for example.

When power generation element 50 includes separator 30, for example, the average pore size of porous body 22 may be larger than that of separator 30, for example. Usually, the structure of the pores of separator 30 does not allow easy entry of deposited Li metal thereinto. Separator 30 may have an average pore size of less than 1 $\mu$m, for example. On the other hand, the structure of the pores of porous body 22 (framework) may allow easy entry of Li metal. For example, this characteristic may differentiate porous body 22 from separator 30.

Porous body 22 may have a porosity from 50 to 80%, for example. When porous body 22 has a porosity from 50 to 80%, the balance between the strength of electrically-insulating skeleton 1 and the Li-filling amount tends to be good, for example. The porosity may be 55% or more, or may be 60% or more, or may be 70% or more, for example. The porosity may be 70% or less, or may be 60% or less, or may be 55% or less, for example.

2-3-1-2. Electrically-Insulating Skeleton

Electrically-insulating skeleton 1 is contiguous in mesh form. Electrically-insulating skeleton 1 may be contiguous in three-dimensional mesh form, for example. Electrically-insulating skeleton 1 may also be called "a mesh-like structure", "a three-dimensional mesh-like structure", and the like, for example. Electrically-insulating skeleton 1 may have an orderly structure, or may have a disorderly structure, for example.

Electrically-insulating skeleton 1 is electrically insulating. Electrically-insulating skeleton 1 may have a volume resistivity of $1 \times 10^5$ Q.cm or more, for example. Electrically-insulating skeleton 1 may have a volume resistivity of $1 \times 10^{10}$ $\Omega$·cm or more, or $1 \times 10^{15}$ Q.cm or more, for example.

Electrically-insulating skeleton 1 may be formed of any material as long as it is electrically insulating. Electrically-insulating skeleton 1 may be insoluble in the electrolyte. Electrically-insulating skeleton 1 may be formed of resin material, for example. Electrically-insulating skeleton 1 may include engineering plastic, super engineering plastic, and/or the like, for example. Electrically-insulating skeleton 1 may include, for example, at least one selected from the group consisting of PI, PAI, and PA. PI, PAI, and PA may have a preferable degree of strength to form the skeleton.

For example, by the following method, electrically-insulating skeleton 1 made of PI may be formed. A polyamic acid solution and spherical silica powder are mixed together to form a dispersion. The resulting dispersion is applied to a substrate to form a coating film. The resulting coating film is heated to imidize the coating film (the polyamic acid). With the use of hydrofluoric acid, for example, the spherical silica powder is cleaned off from the coating film, and thereby a plurality of pores may be formed. For example, the pores may be formed as a result of a plurality of spherical air holes coalescing with each other. The coating film is peeled off from the substrate to recover the coating film (electrically-insulating skeleton 1). With this method, by changing the amount of the spherical silica powder to add the particle size distribution of the spherical silica powder, etc., it is possible to control the pore structure. For example, electrically-insulating skeleton 1 having a uniform pore distribution may be formed. With this method, it is possible to control the average pore size to the range of 0.1 to 2.5 $\mu$m, for example. With this method, it is possible to control the porosity to the range of 60 to 80%, for example.

Electrically-insulating skeleton 1 may be formed of inorganic material, for example. Electrically-insulating skeleton 1 may be formed of oxide glass, for example. Oxide glass may have a preferable degree of strength to form the skeleton. Electrically-insulating skeleton 1 may include, for example, at least one selected from the group consisting of $SiO_2$, $GeO_2$, $B_2O_3$, $P_2O_5$, $As_2O_5$, $Li_2O$, $Na_2O$, $K_2O$, MgO, CaO, BaO, $Al_2O_3$, $TiO_2$, and $ZrO_2$. Electrically-insulating skeleton 1 may be formed of mineral material, for example. Electrically-insulating skeleton 1 may be formed of shirasu glass and/or the like, for example.

For example, by the following method, electrically-insulating skeleton 1 may be formed. A mixture of shirasu (a type of volcanic ash), lime, and boric acid is melted to form a glass formed body. The resulting glass formed body is subjected to heat treatment at a temperature within the range of 600 to 800°C to facilitate separation into two phases. One of the two phases is dissolved and removed, and thereby pores may be formed. That is, electrically-insulating skeleton 1 may be formed. Electrically-insulating skeleton 1 may form a three-dimensional network, for example. Electrically-insulating skeleton 1 formed of shirasu may include $Al_2O_3$-$SiO_2$-based glass and/or the like, for example. With this method, the average pore size may be controlled to the range of 0.5 to 50 $\mu$m, for example. Electrically-insulating skeleton 1 may include a composite material composed of oxide glass and resin material, for example.

### 2-3-2. Seed Particles

Negative electrode 20 may further include seed particles (not illustrated), for example. The seed particles may serve as seeds for Li nucleation during charging. The seed particles may be placed on the surface of negative electrode current collector 21, for example. The seed particles may be placed at the interface between negative electrode current collector 21 and porous body 22, for example. The seed particles may be placed inside the pores 2. The seed particles may include, for example, at least one selected from the group consisting of Li, Mg, Al, Zn, Ag, Pt, and Au. The seed particles may be nanoparticles, for example. The seed particles may have a D50 from 1 to 200 nm, for example.

### 2-3-3. Second Negative Electrode Active Material

Negative electrode 20 may further include a negative electrode active material other than Li (hereinafter also called "a second negative electrode active material"), for example. The second negative electrode active material may include insertion-based active material, alloy-based active material, and/or the like, for example. A combination of Li metal and an insertion-based active material can enhance cycle endurance and/or the like, for example. The second negative electrode active material may be in particle form, for example. The second negative electrode active material may be placed inside the pores 2, for example. The second negative electrode active material may be placed on the surface of porous body 22 (second main face 22b), for example. The second negative electrode active material may be placed at the interface between negative electrode current collector 21 and porous body 22.

The second negative electrode active material may include, for example, at least one selected from the group consisting of natural graphite, artificial graphite, soft carbon, hard carbon, silicon (Si), SiO, Li silicate, Si-based alloy, tin (Sn), SnO, Sn-based alloy, and $Li_4Ti_5O_{12}$.

### 2-3-3-1. Carbon-Based Active Material

"Graphite" collectively refers to natural graphite and artificial graphite. Graphite may be a mixture of natural graphite and artificial graphite. The mixing ratio (mass ratio) may be "(natural graphite)/(artificial graphite) =1/9 to 9/1", "(natural graphite)/(artificial graphite) =2/8 to 8/2", or "(natural graphite)/(artificial graphite) =3/7 to 7/3", for example.

Graphite may include a dopant. The dopant may include, for example, at least one selected from the group consisting of B, N, P, Li, and Ca. The amount to be added, in molar fraction, may be from 0.01 to 5%, or from 0.1 to 3%, or from 0.1 to 1%, for example.

The surface of graphite may be covered with amorphous carbon, for example. The surface of graphite may be covered with another type of material, for example. This another type of material may include, for example, at least one selected from the group consisting of P, W, Al, and O. The another type of material may include, for example, at least one selected from the group consisting of $Al(OH)_3$, $AlOOH$, $Al_2O_3$, $WO_3$, $Li_2CO_3$, $LiHCO_3$, and $Li_3PO_4$.

2-3-3-2. Alloy-Based Active Material

SiO may be represented by the following formula (A-1), for example.

$$SiO_x... \qquad (A-1)$$

In the above formula, the relationship of $0<x<2$ is satisfied.

In the above formula (A-1), x may satisfy $0.5 \leq x \leq 1.5$ or $0.8 \leq x \leq 1.2$, for example.

Li silicate may include, for example, at least one selected from the group consisting of $Li_4SiO_4$, $Li_2SiO_3$, $Li_2Si_2O_5$, and $Li_8SiO_6$. The second negative electrode active material may include a mixture of Si and Li silicate, for example. The mixing ratio (mass ratio) may be "Si/(Li silicate)=1/9 to 9/1", "Si/(Li silicate)=2/8 to 8/2", "Si/(Li silicate)=3/7 to 7/3", or "Si/(Li silicate)=4/6 to 6/4", for example.

The alloy-based active material (such as Si, SiO) may include an additive. The additive may be a substituted solid solution atom or an intruding solid solution atom, for example. The additive may be an adherent adhered to the surface of the alloy-based active material. The adherent may be an elementary substance, an oxide, a carbide, a nitride, a halide, and/or the like, for example. The amount to be added may be, in molar fraction, from 0.01 to 5%, or from 0.1 to 3%, or from 0.1 to 1%, for example. The additive may include, for example, at least one selected from the group consisting of Li, Na, K, Rb, Be, Mg, Ca, Sr, Fe, Ba, B, Al, Ga, In, C, Ge, Sn, Pb, N, P, As, Y, Sb, and S. That is, SiO may be doped with Mg and/or Na. For example, Mg silicate and/or Na silicate may be formed. For example, boron oxide (such as $B_2O_3$, for example), yttrium oxide (such as $Y_2O_3$, for example), and/or the like may be added to SiO.

2-3-3-3. Si-C Composite Material

The second negative electrode active material may include a composite material of the carbon-based active material (such as graphite) and the alloy-based active material (such as Si), for example. A composite material including Si and carbon may also be called "a Si-C composite material". For example, Si microparticles may be dispersed inside carbon particles. For example, Si microparticles may be dispersed inside graphite particles. For example, Li silicate particles may be covered with a carbon material (such as amorphous carbon). The Si-C composite material and graphite may be mixed together for use.

2-3-3-4. Multi-Component System

The second negative electrode active material may include two or more components. The second negative electrode active material may include the carbon-based active material (such as graphite) and the alloy-based active material (such as Si, SiO). The mixing ratio (mass ratio) of the carbon-based active material and the alloy-based active material may be "(carbon-based active material)/(alloy-based active material)=1/9 to 9/1", "(carbon-based active material)/(alloy-based active material)=2/8 to 8/2", "(carbon-based active material)/(alloy-based active material)=3/7 to 7/3", or "(carbon-based active material)/(alloy-based active material)=4/6 to 6/4", for example.

2-3-4. Binder

The second negative electrode active material may be fixed to negative electrode current collector 21, porous body 22, and/or the like by means of a binder, for example. The binder may include any component. The binder may include, for example, at least one selected from the group consisting of polyacrylic acid (PAA), carboxymethylcellulose (CMC), styrene-butadiene rubber (SBR), acrylate butadiene rubber (ABR), polyacrylonitrile (PAN), and derivatives of these.

2-4. Positive Electrode

Positive electrode 10 may be in sheet form, for example. Positive electrode 10 may include a positive electrode current collector 11 and a positive electrode active material layer 12, for example. Positive electrode current collector 11 is electrically conductive. Positive electrode current collector 11 supports positive electrode active material layer 12. Positive electrode current collector 11 may be in sheet form, for example. Positive electrode current collector 11 may have a thickness from 5 to 50 $\mu$m, for example. Positive electrode current collector 11 may include a metal foil, for example. Positive electrode current collector 11 may include, for example, at least one selected from the group consisting of Al, Mn, Ti, Fe, and Cr. Positive electrode current collector 11 may include an Al foil, an Al alloy foil, a Ti foil, a stainless steel (SUS) foil, and/or the like, for example.

Between positive electrode current collector 11 and positive electrode active material layer 12, an intermediate layer (not illustrated) may be formed. The intermediate layer does not include a positive electrode active material. The intermediate layer may have a thickness from 0.1 to 5 $\mu$m, for example. The intermediate layer may include a conductive material, an insulation material, a binder, and/or the like, for example. The conductive material and the binder are described below. The insulation material may include alumina, boehmite, aluminum hydroxide, and/or the like, for example.

Positive electrode active material layer 12 is placed on the surface of positive electrode current collector 11. Positive electrode active material layer 12 may be placed on only one side of positive electrode current collector 11. Positive electrode active material layer 12 may be placed on both sides of positive electrode current collector 11. Positive electrode active material layer 12 may have a thickness from 10 to 1000 $\mu$m, or from 50 to 500 $\mu$m, or from 100 to 300 $\mu$m, for example. Positive electrode active material layer 12 includes a positive electrode active material. Positive electrode active material layer 12 may further include a conductive material, a binder, and the like, for example.

2-4-1. Conductive Material

The conductive material may form an electron conduction path inside the positive electrode active material layer 12. The amount of the conductive material to be used may be, for example, from 0.1 to 10 parts by mass relative to 100 parts by mass of the positive electrode active material. The conductive material may include any component. The conductive material may include, for example, at least one selected from the group consisting of graphite, acetylene black (AB), Ketjenblack (registered trademark), vapor grown carbon fiber (VGCF), carbon nanotube (CNT), and graphene flake (GF).

2-4-2. Binder

The binder is capable of fixing positive electrode active material layer 12 to positive electrode current collector 11. The amount of the binder to be used may be, for example, from 0.1 to 10 parts by mass relative to 100 parts by mass of the positive electrode active material. The binder may include any component. The binder may include, for example, at least one selected from the group consisting of polyvinylidene difluoride (PVdF), vinylidene difluoride-hexafluoropropylene copolymer (PVdF-HFP), tetrafluoroethylene (PTFE), CMC, PAA, polyvinyl alcohol (PVA), polyvinylpyrrolidone (PVP), polyoxyethylene alkyl ether, and derivatives of these.

2-4-3. Other Components

Positive electrode active material layer 12 may further include an inorganic filler, an organic filler, a solid electrolyte, a surface modifier, a lubricant, a flame retardant, a protective agent, a flux, a coupling agent, an adsorbent, and/or the like, for example. Positive electrode active material layer 12 may include polyoxyethylene allylphenyl ether phosphate, zeolite, a silane coupling agent, $MoS_2$, $WO_3$, and/or the like, for example.

2-4-4. Positive Electrode Active Material

The positive electrode active material may be in particle form, for example. The positive electrode active material may include any component. The positive electrode active material may include a transition metal oxide, a polyanion compound, and/or the like, for example. In a single particle (positive electrode active material), the composition may be uniform, or may be non-uniform. For example, there may be a gradient in the composition from the surface of the particle toward the center. The composition may change contiguously, or may change non-contiguously (in steps).

2-4-4-1. Transition Metal Oxide (Space Group R-3m)

The transition metal oxide may have any crystal structure. For example, the transition metal oxide may include a crystal structure that belongs to a space group R-3m and/or the like. For example, a compound represented by the general formula "LiMO$_2$" may have a crystal structure that belongs to a space group R-3m. The transition metal oxide may be represented by the following formula (C-1), for example.

$$Li_{1-a}Ni_xM_{1-x}O_2 \ ... \qquad (C\text{-}1)$$

In the above formula, the relationships of $-0.5 \leq a \leq 0.5$, $0 < x \leq 1$ are satisfied.

M may include, for example, at least one selected from the group consisting of Co, Mn, and Al.

In the above formula (C-1), x may satisfy the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x \leq 1$, for example. a may satisfy the relationship of $-0.4 \leq a \leq 0.4$, $-0.3 \leq a \leq 0.3$, $-0.2 \leq a \leq 0.2$, or $-0.1 \leq a \leq 0.1$, for example.

The transition metal oxide may include, for example, at least one selected from the group consisting of $LiCoO_2$, $LiMnO_2$, $LiNi_{0.9}Co_{0.1}O_2$, $LiNi_{0.9}Mn_{0.1}O_2$, and $LiNiO_2$.

2-4-4-2. NCM

The transition metal oxide may be represented by the following formula (C-2), for example. A compound represented by the following formula (C-2) may also be called "NCM".

$$Li_{1-a}Ni_xCo_yMn_zO_2 \ ... \qquad (C\text{-}2)$$

In the above formula, the relationships of $-0.5 \leq a \leq 0.5$, $0 < x < 1$, $0 < y < 1$, $0 < z < 1$, $x+y+z=1$ are satisfied.

In the above formula (C-2), x may satisfy the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x < 1$, for example.

In the above formula (C-2), y may satisfy the relationship of $0 < y \leq 0.1$, $0.1 \leq y \leq 0.2$, $0.2 \leq y \leq 0.3$, $0.3 \leq y \leq 0.4$, $0.4 \leq y \leq 0.5$, $0.5 \leq y \leq 0.6$, $0.6 \leq y \leq 0.7$, $0.7 \leq y \leq 0.8$, $0.8 \leq y \leq 0.9$, or $0.9 \leq y < 1$, for example.

In the above formula (C-2), z may satisfy the relationship of $0 < z \leq 0.1$, $0.1 \leq z \leq 0.2$, $0.2 \leq z \leq 0.3$, $0.3 \leq z \leq 0.4$, $0.4 \leq z \leq 0.5$, $0.5 \leq z \leq 0.6$, $0.6 \leq z \leq 0.7$, $0.7 \leq z \leq 0.8$, $0.8 \leq z \leq 0.9$, or $0.9 \leq z < 1$, for example.

NCM may include, for example, at least one selected from the group consisting of $LiNi_{1/3}Co_{1/3}Mn_{1/3}O_2$, $LiNi_{0.4}Co_{0.3}Mn_{0.3}O_2$, $LiNi_{0.3}Co_{0.4}Mn_{0.3}O_2$, $LiNi_{0.3}Co_{0.3}Mn_{0.4}O_2$, $LiNi_{0.5}Co_{0.2}Mn_{0.3}O_2$, $LiNi_{0.5}Co_{0.3}Mn_{0.2}O_2$, $LiNi_{0.5}Co_{0.4}Mn_{0.1}O_2$, $LiNi_{0.5}Co_{0.1}Mn_{0.4}O_2$, $LiNi_{0.6}Co_{0.2}Mn_{0.2}O_2$, $LiNi_{0.6}Co_{0.3}Mn_{0.1}O_2$, $LiNi_{0.6}Co_{0.1}Mn_{0.3}O_2$, $LiNi_{0.7}Co_{0.1}Mn_{0.2}O_2$, $LiNi_{0.7}Co_{0.2}Mn_{0.1}O_2$, $LiNi_{0.8}Co_{0.1}Mn_{0.1}O_2$, and $LiNi_{0.9}Co_{0.05}Mn_{0.05}O_2$.

2-4-4-3. NCA

The transition metal oxide may be represented by the following formula (C-3), for example. A compound represented by the following formula (C-3) may also be called "NCA".

$$Li_{1-a}Ni_xCo_yAl_zO_2 \ ... \qquad (C\text{-}3)$$

In the above formula, the relationships of $-0.5 \leq a \leq 0.5$, $0 < x < 1$, $0 < y < 1$, $0 < z < 1$, $x+y+z=1$ are satisfied.

In the above formula (C-3), x may satisfy the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x < 1$, for example.

In the above formula (C-3), y may satisfy the relationship of $0 < y \leq 0.1$, $0.1 \leq y \leq 0.2$, $0.2 \leq y \leq 0.3$, $0.3 \leq y \leq 0.4$, $0.4 \leq y \leq 0.5$, $0.5 \leq y \leq 0.6$, $0.6 \leq y \leq 0.7$, $0.7 \leq y \leq 0.8$, $0.8 \leq y \leq 0.9$, or $0.9 \leq y < 1$, for example.

In the above formula (C-3), z may satisfy the relationship of $0 < z \leq 0.1$, $0.1 \leq z \leq 0.2$, $0.2 \leq z \leq 0.3$, $0.3 \leq z \leq 0.4$, $0.4 \leq z \leq 0.5$, $0.5 \leq z \leq 0.6$, $0.6 \leq z \leq 0.7$, $0.7 \leq z \leq 0.8$, $0.8 \leq z \leq 0.9$, or $0.9 \leq z < 1$, for example.

NCA may include, for example, at least one selected from the group consisting of $LiNi_{0.7}Co_{0.1}Al_{0.2}O_2$, $LiNi_{0.7}Co_{0.2}Al_{0.1}O_2$, $LiNi_{0.8}Co_{0.1}Al_{0.1}O_2$, $LiNi_{0.8}Co_{0.17}Al_{0.03}O_2$, $LiNi_{0.8}Co_{0.15}Al_{0.05}O_2$, and $LiNi_{0.9}Co_{0.05}Al_{0.05}O_2$.

2-4-4-4. Multi-Component System

The positive electrode active material may include two or more NCMs and/or the like, for example. The positive electrode active material may include NCM $(0.6 \leq x)$ and NCM $(x < 0.6)$, for example. "NCM $(0.6 \leq x)$" refers to a compound in which x (Ni ratio) in the above formula (C-2) is 0.6 or more. NCM $(0.6 \leq x)$ may also be called "a high-nickel material", for example. NCM $(0.6 \leq x)$ includes $LiNi_{0.8}Co_{0.1}Mn_{0.1}O_2$ and/or the like, for example. "NCM$(x < 0.6)$" refers to a compound in which x (Ni ratio) in the above formula (C-2) is less than 0.6. NCM $(x < 0.6)$ includes $LiNi_{1/3}Co_{1/3}Mn_{1/3}O_2$ and/or the like, for example. The mixing ratio (mass ratio) between NCM $(0.6 \leq x)$ and NCM $(x < 0.6)$ may be "NCM $(0.6 \leq x)$/NCM $(x < 0.6)$=9/1 to 1/9", or "NCM $(0.6 \leq x)$/NCM $(x < 0.6)$=9/1 to 4/6", or "NCM $(0.6 \leq x)$/NCM $(x < 0.6)$=9/1 to 3/7", for example.

The positive electrode active material may include NCA and NCM, for example. The mixing ratio (mass ratio) between NCA and NCM may be "NCA/NCM=9/1 to 1/9", "NCA/NCM=9/1 to 4/6", or "NCA/NCM=9/1 to 3/7", for example.

Between NCA and NCM, the Ni ratio may be the same or may be different. The Ni ratio of NCA may be more than the Ni ratio of NCM. The Ni ratio of NCA may be less than the Ni ratio of NCM.

2-4-4-5. Transition Metal Oxide (Space Group C2/m)

The transition metal oxide may include a crystal structure that belongs to a space group C2/m and/or the like, for example. The transition metal oxide may be represented by the following formula (C-4), for example.

$$Li_2MO_3 \ldots \quad (C-4)$$

In the above formula, M may include, for example, at least one selected from the group consisting of Ni, Co, Mn, and Fe.

The positive electrode active material may include a mixture of $LiMO_2$ (space group R-3m) and $Li_2MO_3$ (space group C2/m), for example. The positive electrode active material may include a solid solution that is formed of $LiMO_2$ and $Li_2MO_3$ ($Li_2MO_3$-$LiMO_2$), and/or the like, for example.

2-4-4-6. Transition Metal Oxide (Space Group Fd-3m)

The transition metal oxide may include a crystal structure that belongs to a space group Fd-3m, and/or the like, for example. The transition metal oxide may be represented by, for example, the following formula (C-5):

$$LiMn_{2-x}M_xO_4 \ldots \quad (C-5)$$

where the relationship of $0 \leq x \leq 2$ is satisfied.

M may include, for example, at least one selected from the group consisting of Ni, Fe, and Zn.

$LiM_2O_4$ (space group Fd-3m) may include, for example, at least one selected from the group consisting of $LiMn_2O_4$ and $LiMn_{1.5}Ni_{0.5}O_4$. The positive electrode active material may include a mixture of $LiMO_2$ (space group R-3m) and $LiM_2O_4$ (space group Fd-3m), for example. The mixing ratio (mass ratio) between $LiMO_2$ (space group R-3m) and $LiM_2O_4$ (space group Fd-3m) may be "$LiMO_2/LiM_2O_4$=9/1 to 9/1", "$LiMO_2/LiM_2O_4$=9/1 to 5/5", or "$LiMO_2/LiM_2O_4$=9/1 to 7/3", for example.

2-4-4-7. Polyanion Compound

The polyanion compound may include a phosphoric acid salt (such as $LiFePO_4$ for example), a silicic acid salt, a boric acid salt, and/or the like, for example. The polyanion compound may be represented by the following formulae (C-6) to (C-9), for example.

$$LiMPO_4 \ldots \quad (C-6)$$

$$Li_{2-x}MPO_4F \ldots \quad (C-7)$$

$$Li_2MSiO_4 \ldots \quad (C-8)$$

$$LiMBO_3 \ldots \quad (C-9)$$

In the above formulae (C-6) to (C-9), M may include, for example, at least one selected from the group consisting of Fe, Mn, Co. In the above formula (C-7), the relationship of $0 \leq x \leq 2$ may be satisfied, for example.

The positive electrode active material may include a mixture of $LiMO_2$ (space group R-3m) and the polyanion compound, for example. The mixing ratio (mass ratio) between $LiMO_2$ (space group R-3m) and the polyanion compound may be "$LiMO_2$/(polyanion compound) =9/1 to 9/1", "$LiMO_2$/(polyanion compound) =9/1 to 5/5", or "$LiMO_2$/(polyanion compound) =9/1 to 7/3", for example.

2-4-4-8. Dopant

To the positive electrode active material, a dopant may be added. The dopant may be diffused throughout the entire particle, or may be locally distributed. For example, the dopant may be locally distributed on the particle surface. The dopant may be a substituted solid solution atom, or may be an intruding solid solution atom. The amount of the dopant to be added (the molar fraction relative to the total amount of the positive electrode active material) may be from 0.01 to 5%, or may be from 0.1 to 3%, or may be from 0.1 to 1%, for example. A single type of dopant may be added, or two or more types of dopant may be added. The two or more dopants may form a complex.

The dopant may include, for example, at least one selected from the group consisting of B, C, N, a halogen, Si, Na, Mg, Al, Mn, Co, Cr, Sc, Ti, V, Cu, Zn, Ga, Ge, Se, Sr, Y, Zr, Nb, Mo, In, Pb, Bi, Sb, Sn, W, La, Ce, Pr, Nd, Pm, Sm, Eu, Gd, Tb, Dy, Ho, Er, Tm, Yb, Lu, and an actinoid.

For example, to NCA, a combination of "Zr, Mg, W, Sm", a combination of "Ti, Mn, Nb, Si, Mo", or a combination of "Er, Mg" may be added.

For example, to NCM, Ti may be added. For example, to NCM, a combination of "Zr, W", a combination of "Si, W", or a combination of "Zr, W, Al, Ti, Co" may be added.

2-4-4-9. Surface Covering

Positive electrode 10 may include a composite particle. The composite particle includes a core particle and a covering layer. The core particle includes a positive electrode active material. The covering layer covers at least part of the surface of the core particle. The covering layer may have a thickness from 1 to 3000 nm, or from 5 to 2000 nm, or from 10 to 1000 nm, or from 10 to 100 nm, or from 10 to 50 nm, for example. The thickness of the covering layer may be measured in an SEM (Scanning Electron Microscope) image of a cross section of the particle, and/or the like, for example. More specifically, the composite particle is embedded in a resin material to prepare a sample. With the use of an ion milling apparatus, a cross section of the sample is exposed. For example, an ion milling apparatus with the trade name "ArBlade (registered trademark) 5000" manufactured by Hitachi High-Technologies (or a similar product) may be used. The cross section of the sample is examined by an SEM. For example, an SEM apparatus with the trade name "SU8030" manufactured by Hitachi High-Technologies (or a similar product) may be used. For each of ten composite particles, the thickness of the covering layer is measured in twenty fields of view. The arithmetic mean of a total of 200 thickness measurements is used.

The ratio of the part of the surface of the core particle covered by the covering layer is also called "a covering rate". The covering rate may be 1% or more, or 10% or more, or 30% or more, or 50% or more, or 70% or more, for example. The covering rate may be 100% or less, or 90% or less, or 80% or less, for example.

For example, the covering rate may be measured by XPS (X-ray Photoelectron Spectroscopy). For example, an XPS apparatus with the trade name "PHI X-tool" manufactured by ULVAC-PHI (or a similar product) may be used. A sample powder consisting of the composite particle is loaded in the XPS apparatus. Narrow scan analysis is carried out. The measurement data is processed with an analysis software. For example, an analysis software with the trade name "MulTiPak" manufactured by ULVAC-PHI (or a similar product) may be used. The measurement data is analyzed to detect a plurality of types of elements. From the area of each peak, the ratio of the detected element is determined. By the following equation, the covering rate is determined.

$$\theta = \{ I_1 / (I_0 + I_1) \} \times 100$$

$\theta$: Covering rate [%]
$I_0$: Ratio of element attributable to core particle
$I_1$: Ratio of element attributable to covering layer

For example, when the core particle includes NCM, $I_0$ represents the total ratio of the elements "Ni, Co, Mn". For example, when the core particle includes NCA, $I_0$ represents the total ratio of the elements "Ni, Co, Al". For example, when the covering layer includes P and B, $I_1$ represents the total ratio of the elements "P, B".

The covering layer may include any component. The covering layer may include an elementary substance, organic matter, an inorganic acid salt, an organic acid salt, a hydroxide, an oxide, a carbide, a nitride, a sulfide, a halide, and/or the like, for example. The covering layer may include, for example, at least one selected from the group consisting of B, Al, W, Zr, Ti, Co, F, lithium compound (such as $Li_2CO_3$, $LiHCOs$, $LiOH$, $Li_2O$, for example), tungsten oxide (such as $WO_3$, for example), titanium oxide (such as $TiO_2$, for example), zirconium oxide (such as $ZrO_2$, for example), boron oxide, boron phosphate (such as $BPO_4$, for example), aluminum oxide (such as $Al_2O_3$, for example), boehmite, aluminum hydroxide, phosphoric acid salt [such as $Li_3PO_4$, $(NH_4)_3PO_4$, $AlPO_4$, for example], boric acid salt (such as $Li_2B_4O_7$, $LiBO_3$, for example), polyacrylic acid salt (such as Li salt, Na salt, $NH_4$ salt), acetic acid salt (such as Li salt, for example), CMC (such as acid type, Na salt, Li salt, $NH_4$ salt), $LiNbO_3$, $Li_2TiO_3$, and Li-containing halide (such as $LiAlCl_4$, $LiTiAlF_6$, $LiYBr_6$, $LiYCl_6$, for example).

2-4-4-10. Hollow Particles, Solid Particles

"Hollow particle" refers to a secondary particle that has a central cavity whose area occupies 30% or more of the entire cross-sectional area of the particle in a cross-sectional image of the particle. The proportion of the cavity in the hollow particle may be 40%, or 50% or more, or 60% or more, for example. "Solid particle" refers to a secondary particle that has a central cavity whose area occupies less than 30% of the entire cross-sectional area of the particle in a cross-sectional image of the particle. The proportion of the cavity in the solid particle may be 20% or less, or 10% or less, or 5% or less, for example. The positive electrode active material may be hollow particles, or may be solid particles. A mixture of hollow particles and solid particles may be used. The mixing ratio (mass ratio) between hollow particles and solid particles may be "(hollow particles)/(solid particles)=1/9 to 9/1", or "(hollow particles)/(solid particles)=2/8 to 8/2", or "(hollow particles)/(solid particles)=3/7 to 7/3", or "(hollow particles)/(solid particles)=4/6 to 6/4", for example.

2-4-4-11. Large Particles, Small Particles

"Electrode active material" collectively refers to a positive electrode active material and a negative electrode active material. The electrode active material may have a unimodal particle size distribution (based on the number), for example. The electrode active material may have a multimodal particle size distribution, for example. The electrode active material may have a bimodal particle size distribution, for example. That is, the electrode active material may include large particles and small particles. When the particle size distribution is bimodal, the particle size corresponding to the peak top of the larger particle size is regarded as the particle size of the large particles ($d_L$). The particle size corresponding to the peak top of the smaller particle size is regarded as the particle size of the small particles (ds). The particle size ratio ($d_L/d_S$) may be from 2 to 10, or from 2 to 5, or from 2 to 4, for example. $d_L$ may be from 8 to 20 $\mu$m, or from 8 to 15 $\mu$m, for example. ds may be from 1 to 10 $\mu$m, or from 1 to 5 $\mu$m, for example.

For example, with the use of a waveform analysis software, peak separating processing may be carried out for the particle size distribution. The ratio between the peak area of the large particles ($S_L$) and the peak area of the small particles (Ss) may be "$S_L/S_S$=1/9 to 9/1", or "$S_L/S_S$=5/5 to 9/1", or "$S_L/S_S$=7/3 to 9/1", for example.

The number-based particle size distribution is measured by a microscope method. From the electrode active material layer, a plurality of cross-sectional samples are taken. The cross-sectional sample may include a cross section vertical to the surface of the electrode active material layer, for example. By ion milling and/or the like, for example, cleaning is carried out to the side that is to be observed. By SEM, the cross-sectional sample is examined. The magnification for the examination is adjusted in such a way that 10 to 100 particles are contained within the examination field of view. The Feret diameters of all the particles in the image are measured. "Feret diameter" refers to the distance between two points located farthest apart from each other on the outline of the secondary particle. The plurality of the cross-sectional samples are examined to obtain a total of 1000 or more Feret diameters. From the 1000 or more Feret diameters, number-based particle size distribution is created.

The bimodal particle size distribution may be formed by two types of particles mixed together. These two types of particles have different particle size distributions. For example, the two types of particles may have different D50. "D50" refers to a particle size in volume-based particle size distribution at which the cumulative frequency accumulated from the side of small particle sizes reaches 50%. D50 may be measured by laser diffraction. The sample to be measured is powder. For example, the large particles may have a D50 from 8 to 20 $\mu$m, or from 8 to 15 $\mu$m. For example, the small particles may have a D50 from 1 to 10 $\mu$m, or from 1 to 5 $\mu$m. The ratio of the D50 of the large particles to the D50 of the small particles may be from 2 to 10, or from 2 to 5, or from 2 to 4, for example. The mixing ratio (mass ratio) between the large particles and the small particles may be "(large particles)/(small particles)=1/9 to 9/1", or "(large particles)/(small particles)=5/5 to 9/1", or "(large particles)/(small particles)=7/3 to 9/1", for example.

The large particles and the small particles may have the same composition, or may have different compositions. For example, the large particles may be NCA and the small particles may be NCM. For example, the large particles may be NCM ($0.6 \leq x$) and the small particles may be NCM ($x < 0.6$).

2-5. Electrolyte

In the electrolyte, Li ions are dissolved. The electrolyte may be a liquid electrolyte, or may be a gelled electrolyte. The liquid electrolyte may include an electrolyte solution, for example. The electrolyte solution includes a solvent and a solute.

2-5-1. Solute

The concentration of the solute may be from 0.5 to 1 mol/L, or from 1 to 1.5 mol/L, or from 1.5 to 2 mol/L, or from 2 to 2.5 mol/L, or from 2.5 to 3 mol/L, for example. The solute includes a supporting salt (a Li salt). The solute may include an inorganic acid salt, an organic acid salt, an imide salt, an oxalato complex, a halide, and/or the like, for example. The solute may include, for example, at least one selected from the group consisting of $LiPF_6$, $LiBF_4$, $LiClO_4$, $LiAsF_6$, $LiSbF_6$, $LiN(SO_2F)_2$ "LiFSI", $LiN(SO_2CF_3)_2$ "LiTFSI", $LiB(C_2O_4)_2$ "LiBOB", $LiBF_2(C_2O_4)$ "LiDFOB", $LiPF_2(C_2O_4)_2$ "LiDFOP", $LiPO_2F_2$, $FSO_3Li$, LiI, LiBr, and derivatives of these.

2-5-2. Solvent

2-5-2-1. Ether-Based Solvent

The electrolyte solution may include an ether-based solvent and/or the like, for example. The solvent may include HFE and/or the like, for example. HFE may include, for example, at least one selected from the group consisting of a difluoromethyl group, a 2,2-difluoroethyl group, a 2,2,2-trifluoroethyl group, a 1,1,2,2-tetrafluoroethyl group, a 2,2,3,3,3-pentafluoropropyl group, a 2,2,3,3-tetrafluoropropyl group, a 1,1,1,3,3,3-hexafluoroisopropyl group, a 1,1,2,3,3,3-hexafluoropropyl group, a 2,2,3,3,4,4,4-heptafluorobutyl group, a 2,2,3,3,4,4-hexafluorobutyl group, and a 2,2,3,3,4,4,5,5-octafluoropentyl group.

HFE may include, for example, at least one selected from the group consisting of 1,1,2,2-tetrafluoroethyl 2,2,3,3-tetrafluoropropyl ether (TTE), 2,2,2-trifluoroethyl ether, difluoromethyl 2,2,3,3-tetrafluoropropyl ether, 2,2,3,3-tetrafluoropropyl 1,1,2,3,3,3-hexafluoropropyl ether, 2,2,3,3,4,4,5,5-octafluoropentyl 1,1,2,2-tetrafluoroethyl ether, and derivatives of these.

The solvent may also include an ether other than HFE (hereinafter also called "a second ether"). The second ether may include, for example, at least one selected from the group consisting of tetrahydrofuran (THF), 1,4-dioxane (DOX), 1,3-dioxolane (DOL), 1,2-dimethoxyethane (DME), 1,2-diethoxyethane (DEE), ethylglyme, triglyme, tetraglyme, and derivatives of these. For example, the solvent may include the second ether (such as DME) in an amount from 1 to 50% in terms of volume fraction, with the remainder being made up of HFE. For example, the solvent may include the second ether in an amount of 10 to 40% in terms of volume fraction, with the remainder being made up of HFE.

2-5-2-2. Carbonate-Based Solvent

The electrolyte solution may include a carbonate-based solvent (a carbonate-ester-based solvent), for example. The solvent may include a cyclic carbonate, a chain carbonate, a fluorinated carbonate, and/or the like, for example. The solvent may include, for example, at least one selected from the group consisting of ethylene carbonate (EC), propylene carbonate (PC), butylene carbonate (BC), dimethyl carbonate (DMC), diethyl carbonate (DEC), ethyl methyl carbonate (EMC), monofluoroethylene carbonate (FEC), difluoroethylene carbonate, 4,4-difluoroethylene carbonate, trifluoroethylene carbonate, perfluoroethylene carbonate, fluoropropylene carbonate, difluoropropylene carbonate, and derivatives of these.

The solvent may include a cyclic carbonate (such as EC, PC, FEC) and a chain carbonate (such as EMC, DMC, DEC). The mixing ratio between the cyclic carbonate and the chain carbonate (volume ratio) may be "(cyclic carbonate)/(chain carbonate)=1/9 to 4/6", or "(cyclic carbonate)/(chain carbonate)=2/8 to 3/7", or "(cyclic carbonate)/(chain carbonate)=3/7 to 4/6", for example.

The solvent may include a cyclic carbonate (such as EC, PC) and a fluorinated cyclic carbonate (such as FEC). The mixing ratio between the cyclic carbonate and the fluorinated cyclic carbonate (volume ratio) may be "(cyclic carbonate)/(fluorinated cyclic carbonate)=99/1 to 90/10", or "(cyclic carbonate)/(fluorinated cyclic carbonate)=9/1 to 1/9", or "(cyclic carbonate)/(fluorinated cyclic carbonate)=9/1 to 7/3", or "(cyclic carbonate)/(fluorinated cyclic carbonate)=3/7 to 1/9", for example.

The solvent may include EC, FEC, EMC, DMC, and DEC, for example. The volume ratio of these components may satisfy the relationship represented by the following equation (E-1), for example.

$$V_{EC} + V_{FEC} + V_{EMC} + V_{DMC} + V_{DEC} = 10 \ ... \ (E\text{-}1)$$

In the above formula, each of $V_{EC}$, $V_{FEC}$, $V_{EMC}$, $V_{DMC}$, and $V_{DEC}$ represents the volume ratio of EC, FEC, EMC, DMC, and DEC, respectively.

The following relationships are satisfied: $1 \leq V_{EC} \leq 4$, $0 \leq V_{FEC} \leq 3$, $V_{EC}+V_{FEC} \leq 4$, $0 \leq V_{EMC} \leq 9$, $0 \leq V_{DMC} \leq 9$, $0 \leq V_{DEC} \leq 9$, $6 \leq V_{EMC}+V_{DMC}+V_{DEC} \leq 9$.

In the above equation (E-1),

the relationship of $1 \leq V_{EC} \leq 2$ or $2 \leq V_{EC} \leq 3$ may be satisfied, for example;
the relationship of $1 \leq V_{FEC} \leq 2$ or $2 \leq V_{FEC} \leq 4$ may be satisfied, for example;

the relationship of $3 \leq V_{EMC} \leq 4$ or $6 \leq V_{EMC} \leq 8$ may be satisfied, for example;
the relationship of $3 \leq V_{DMC} \leq 4$ or $6 \leq V_{DMC} \leq 8$ may be satisfied, for example; and
the relationship of $3 \leq V_{DEC} \leq 4$ or $6 \leq V_{DEC} \leq 8$ may be satisfied, for example.

The solvent may have a composition of "EC/EMC=3/7", "EC/DMC=3/7", "EC/FEC/DEC=1/2/7", "EC/DMC/EMC=3/4/3", "EC/DMC/EMC=3/3/4", "EC/FEC/DMC/EMC=2/1/4/3", "EC/FEC/DMC/EMC=1/2/4/3", "EC/FEC/DMC/EMC=2/1/3/4", "EC/FEC/DMC/EMC=1/2/3/4" (volume ratio), and/or the like, for example.

### 2-5-3. Additive

The electrolyte solution may include any additive. The amount to be added (the mass fraction to the total amount of the electrolyte solution) may be from 0.01 to 5%, or from 0.05 to 3%, or from 0.1 to 1%, for example. The additive may include an SEI (Solid Electrolyte Interphase) formation promoter, an SEI formation inhibitor, a gas generation agent, an overcharging inhibitor, a flame retardant, an antioxidant, an electrode-protecting agent, a surfactant, and/or the like, for example.

The additive may include, for example, at least one selected from the group consisting of vinylene carbonate (VC), vinylethylene carbonate (VEC), 1,3-propane sultone (PS), tert-amylbenzene, 1,4-di-tert-butylbenzene, biphenyl (BP), cyclohexylbenzene (CHB), ethylene sulfite (ES), propane sultone (PS), ethylene sulfate (DTD), γ-butyrolactone, phosphazene compound, carboxylate ester [such as methyl formate (MF), methyl acetate (MA), methyl propionate (MP), diethyl malonate (DEM), for example], fluorobenzene (such as monofluorobenzene (FB), 1,2-difluorobenzene, 1,3-difluorobenzene, 1,4-difluorobenzene, 1,2,3-trifluorobenzene, 1,2,4-trifluorobenzene, 1,3,5-trifluorobenzene, 1,2,3,4-tetrafluorobenzene, 1,2,3,5-tetrafluorobenzene, 1,2,4,5-tetrafluorobenzene, pentafluorobenzene, hexafluorobenzene, for example), fluorotoluene (such as 2-fluorotoluene, 3-fluorotoluene, 4-fluorotoluene, 2,3-difluorotoluene, 2,4-difluorotoluene, 2,5-difluorotoluene, 2,6-difluorotoluene, 3,4-difluorotoluene, octafluorotoluene, for example), benzotrifluoride (such as benzotrifluoride, 2-fluorobenzotrifluoride, 3-fluorobenzotrifluoride, 4-fluorobenzotrifluoride, 2-methylbenzotrifluoride, 3-methylbenzotrifluoride, 4-methylbenzotrifluoride, for example), fluoroxylene (such as 3-fluoro-o-xylene, 4-fluoro-o-xylene, 2-fluoro-m-xylene, 5-fluoro-m-xylene, for example), sulfur-containing heterocyclic compound (such as benzothiazole, 2-methylbenzothiazole, tetrathiafulvalene, for example), nitrile compound (such as adiponitrile, succinonitrile, for example), phosphate (such as trimethyl phosphate, triethyl phosphate, for example), carboxylic anhydride (such as acetic anhydride, propionic anhydride, oxalic anhydride, succinic anhydride, maleic anhydride, phthalic anhydride, benzoic anhydride, for example), alcohol (such as methanol, ethanol, n-propyl alcohol, ethylene glycol, diethylene glycol monomethyl ether, for example), and derivatives of these.

The components described above as the solute and the solvent may be used as a trace component (an additive). The additive may include, for example, at least one selected from the group consisting of $LiBF_4$, LiFSI, LiTFSI, LiBOB, LiDFOB, LiDFOP, $LiPO_2F_2$, $FSO_3Li$, LiI, LiBr, HFE, DOX, PC, FEC, and derivatives of these.

### 2-5-4. Ionic Liquid

The liquid electrolyte may include an ionic liquid. The liquid electrolyte may include, for example, at least one selected from the group consisting of a sulfonium salt, an ammonium salt, a pyridinium salt, a piperidinium salt, a pyrrolidinium salt, a morpholinium salt, a phosphonium salt, an imidazolium salt, and derivatives of these.

### 2-5-5. Gelled Electrolyte

The gelled electrolyte may include a liquid electrolyte and a polymer material. The polymer material may form a polymer matrix. The polymer material may include, for example, at least one selected from the group consisting of PVdF, PVdF-HFP, PAN, PVdF-PAN, polyethylene oxide (PEO), polyethylene glycol (PEG), derivatives of these, and copolymers of these. The "copolymer" includes at least one selected from the group consisting of unspecified-type, statistical-type, random-type, alternating-type, periodic-type, block-type, and graft-type.

### 2-6. Separator

Separator 30 is capable of separating positive electrode 10 from negative electrode 20. Separator 30 is electrically insulating. Separator 30 may include, for example, at least one selected from the group consisting of a resin film, an inorganic particle layer, and an organic particle layer. Separator 30 may include a resin film and an inorganic particle layer, for example.

2-6-1. Resin Film

The resin film is porous. The resin film may include a microporous film, a nonwoven fabric, and/or the like, for example. The resin film includes a resin skeleton. The resin skeleton may be contiguous in mesh form, for example. Gaps in the resin skeleton form pores. The resin film allows the electrolyte to permeate therethrough. The resin film may have an average pore size of less than 1 $\mu$m, for example. The resin film may have an average pore size from 0.01 to 0.5 $\mu$m, for example. The resin film may have a Gurley value from 50 to 250 s/100cm$^3$, for example. "Gurley value" may be measured by a Gurley test method.

The resin film may include, for example, at least one selected from the group consisting of an olefin-based resin, a polyurethane-based resin, a polyamide-based resin, a cellulose-based resin, a polyether-based resin, an acrylic-based resin, a polyester-based resin, and the like. The resin film may include, for example, at least one selected from the group consisting of polyethylene (PE), polypropylene (PP), polyamide (PA), polyamide-imide (PAI), polyimide (PI), aromatic polyamide (aramid), and polyphenylene ether (PPE), and derivatives of these. The resin film may be formed by stretching, phase separation, and/or the like, for example. The resin film may have a thickness from 5 to 50 $\mu$m, or from 10 to 25 $\mu$m, for example.

The resin film may have a monolayer structure. The resin film may consist of a PE layer, for example. A skeleton of a PE layer is formed of PE. The PE layer may have shut-down function. The resin film may have a multilayer structure, for example. The resin film may include a PP layer and a PE layer, for example. A skeleton of a PP layer is formed of PP. The resin film may have a three-layer structure, for example. The resin film may be formed by stacking a PP layer, a PE layer, and a PP layer in this order, for example. The thickness of the PE layer may be from 5 to 20 $\mu$m, for example. The thickness of the PP layer may be from 3 to 10 $\mu$m, for example.

2-6-2. Inorganic Particle Layer

The inorganic particle layer may be formed on the surface of the resin film. The inorganic particle layer may be formed on only one side of the resin film, or may be formed on both sides of the resin film. The inorganic particle layer may be formed on the side facing positive electrode 10, or may be formed on the side facing negative electrode 20. The inorganic particle layer may be formed on the surface of positive electrode 10, or may be formed on the surface of negative electrode 20 (porous body 22).

The inorganic particle layer is porous. The inorganic particle layer includes inorganic particles. The inorganic particles may also be called "an inorganic filler". Gaps between the inorganic particles form pores. The inorganic particle layer may have a thickness from 0.5 to 10 $\mu$m, or from 1 to 5 $\mu$m, for example. The inorganic particles may include a heat-resistant material, for example. The inorganic particle layer that includes a heat-resistant material is also called "HRL (Heat Resistance Layer)". The inorganic particles may include at least one selected from the group consisting of boehmite, alumina, zirconia, titania, magnesia, silica, and the like. The inorganic particles may have any shape. The inorganic particles may be spherical, rod-like, plate-like, fibrous, and/or the like, for example. The inorganic particles may have a D50 from 0.1 to 10 $\mu$m, or from 0.5 to 3 $\mu$m, for example. The inorganic particle layer may further include a binder. The binder may include, for example, at least one selected from the group consisting of an acrylic-based resin, a polyamide-based resin, a fluorine-based resin, an aromatic-polyether-based resin, and a liquid-crystal-polyester-based resin, and the like.

2-6-3. Organic Particle Layer

Separator 30 may include an organic particle layer, for example. Separator 30 may include an organic particle layer instead of the resin film, for example. Separator 30 may include an organic particle layer instead of the inorganic particle layer, for example. Separator 30 may include both the resin film and an organic particle layer. Separator 30 may include both the inorganic particle layer and an organic particle layer. Separator 30 may include the resin film, the inorganic particle layer, and an organic particle layer.

The organic particle layer may have a thickness from 0.1 to 50 $\mu$m, or from 0.5 to 20 $\mu$m, or from 0.5 to 10 $\mu$m, or from 1 to 5 $\mu$m, for example. The organic particle layer includes organic particles. The organic particles may also be called "an organic filler". The organic particles may include a heat-resistant material. The organic particles may include, for example, at least one selected from the group consisting of PE, PP, PTFE, PI, PAI, PA, aramid, and the like. The organic particles may be spherical, rod-like, plate-like, fibrous, and/or the like, for example. The organic particles may have a D50 from 0.1 to 10 $\mu$m, or from 0.5 to 3 $\mu$m, for example.

Separator 30 may include a mixed layer, for example. The mixed layer includes both inorganic particles and organic particles.

2-7. Cell Configuration

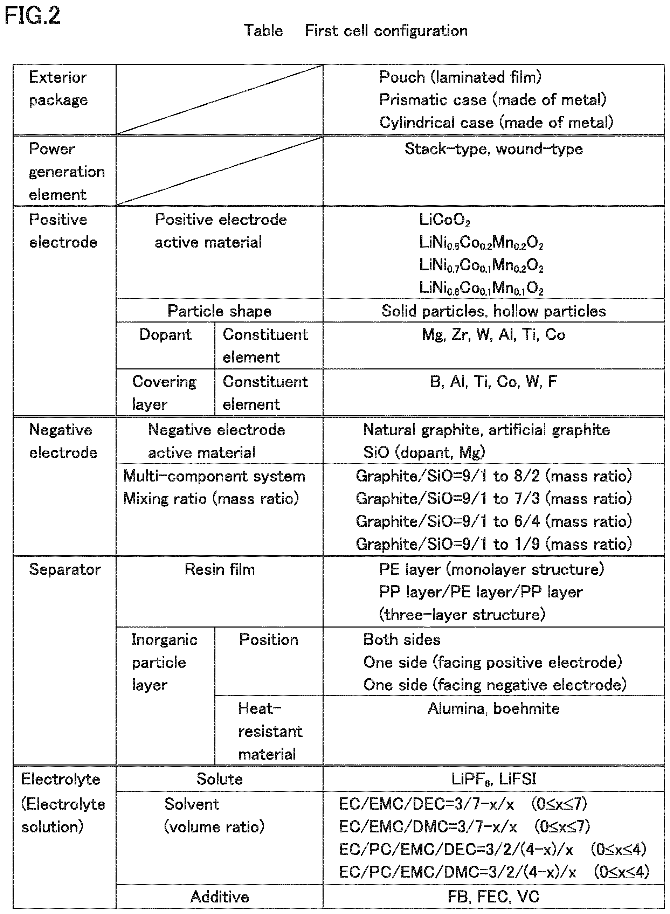

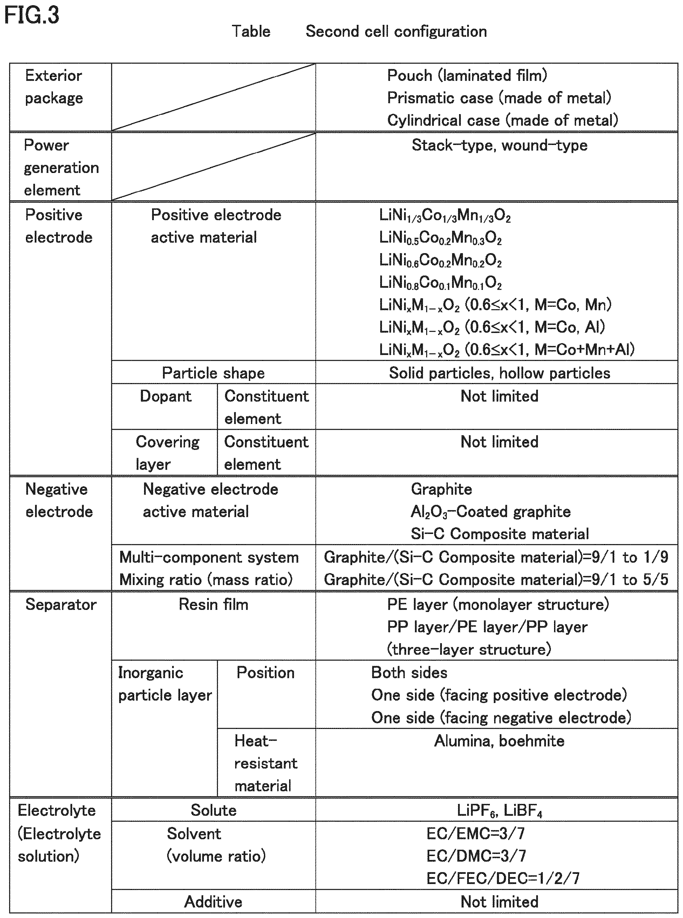

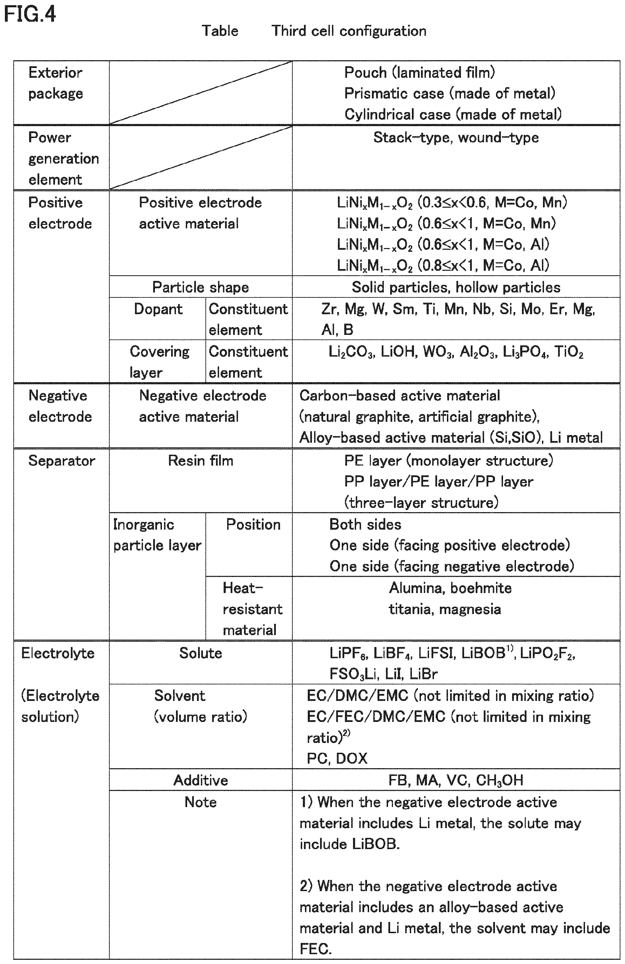

Fig. 2 is a table showing a first cell configuration. Fig. 3 is a table showing a second cell configuration. Fig. 4 is a table showing a third cell configuration. In each table, when a plurality of materials are described in a single cell, this description is intended to mean one of them as well as a combination of them. For example, when materials "$\alpha$, $\beta$, $\gamma$" are described in a single cell, this description is intended to mean "at least one selected from the group consisting of $\alpha$, $\beta$, and $\gamma$". Certain elements may be extracted from the first to third cell configurations and optionally combined together.

For example, the present embodiment may be incorporated into the first to third cell configurations. For example, the present embodiment may be combined with the first to third cell configurations. For example, the present embodiment may replace part of the first to third cell configurations. For example, the negative electrode in the first cell configuration may be replaced by the negative electrode according to the present embodiment (negative electrode current collector 21, porous body 22). For example, the negative electrode in the first cell configuration may be used in combination with the negative electrode according to the present embodiment. Combining the first to third cell configurations with the present embodiment, for example, may improve battery performance.

3. Method of Charging and Discharging

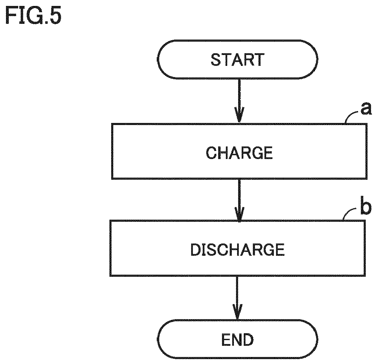

Fig. 5 is a schematic flowchart illustrating a method of charging and discharging according to the present embodiment. Hereinafter, "the method of charging and discharging according to the present embodiment" may also be simply called "the present method". The present method includes "(a) charging" and "(b) discharging". The order illustrated in Fig. 5 is merely an example. The present method includes "(a) charging" and "(b) discharging" in any order as long as it includes at least one "(a) charging" and at least one "(b) discharging". For example, charging may be successively carried out twice, followed by discharging. For example, "(a) charging" and "(b) discharging" may be carried out with a pause between them.

3-1. (a) Charging

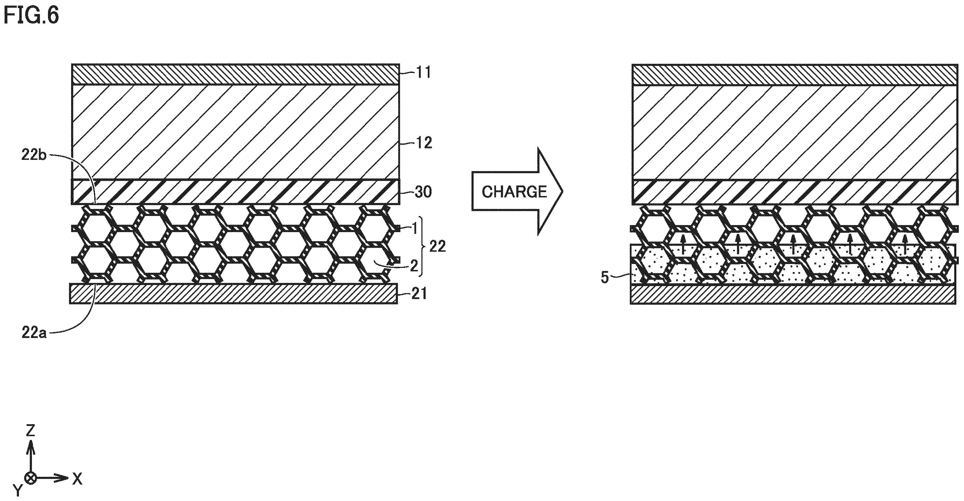

The present method includes charging cell 100. Fig. 6 is a conceptual view illustrating a deposition behavior according to the present embodiment. Charging includes deposition of a Li metal 5 in the pores 2. During charging, Li metal 5 may start to be deposited at first main face 22a (the interface between electrically-insulating skeleton 1 and negative electrode current collector 21). Deposition of Li metal 5 may proceed in the thickness direction of porous body 22 (the Z-axis direction). That is, in a direction heading from first main face 22a toward second main face 22b, sequentially from those close to first main face 22a, Li metal 5 may fill pores 2. Charging completes by the time when Li metal 5 reaches second main face 22b. Charging is carried out in such a manner that Li metal 5 is present only inside the porous body 22, and thereby expansion of cell 100 may be reduced.

3-2. (b) Discharging

The present method includes discharging cell 100. Discharging includes dissolution of Li metal 5 present in the pores 2 into the electrolyte. During discharging, Li metal 5 may start to be dissolved at a side close to second main face 22b (a side close to positive electrode 10). Dissolution of Li metal 5 may proceed in the thickness direction of porous body 22. That is, in a direction heading from second main face 22b toward first main face 22a, sequentially from those close to second main face 22b, Li metal 5 may be dissolved. The entire amount of Li metal 5 may be dissolved, or part of Li metal 5 may be dissolved. It is conceivable that dissolution of Li metal 5 is less likely to cause a change in the contour dimensions of porous body 22 (framework). As a result of dissolution of Li metal 5 occurring only inside the porous body 22, a volume change (shrinkage) of the cell may be reduced.

4. Battery System

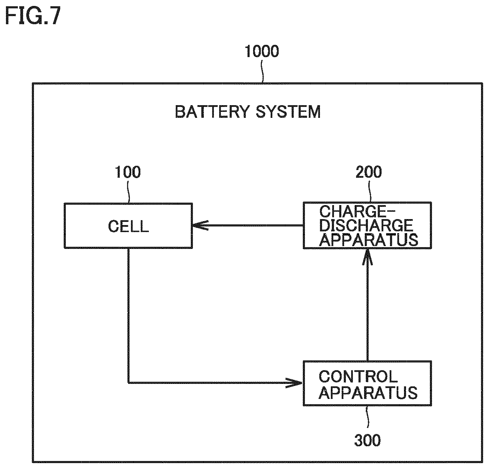

Fig. 7 is a conceptual view illustrating a battery system according to the present embodiment. A battery system 1000 may be mounted on an electric vehicle and/or the like, for example. Battery system 1000 may include cell 100, a charge-discharge apparatus 200, and a control apparatus 300, for example.

Battery system 1000 may include a single cell 100, or may include a plurality of cells 100. The plurality of cells 100 may form a module or a battery pack. Charge-discharge apparatus 200 and control apparatus 300 are capable of implementing the present method described above (Fig. 5). Charge-discharge apparatus 200 either charges or discharges cell 100. Control apparatus 300 may include various sensors (such as a current sensor, a voltage sensor, a temperature sensor). Based on various types of information acquired by the sensor, control apparatus 300 may control the amount of current and/or the like, for example. For example, charge-discharge apparatus 200 may be integrally formed with control apparatus 300. For example, control apparatus 300 may include charge-discharge apparatus 200.

[Examples]

5. Experiments

In the manner described below, cells according to Nos. 1 to 14 were produced. Hereinafter, "the cell according to No. 1" may be simply referred to as "No. 1" and/or the like, for example.

5-1. Producing Cell

No. 1

A positive electrode active material ($LiNi_{0.5}Co_{0.2}Mn_{0.3}O_2$), a conductive material (AB), a binder (PVdF), and a dispersion medium (N-methyl-2-pyrrolidone) were mixed together to form a slurry. The mixing ratio was "(positive electrode active material)/(conductive material)/binder=90/5/5 (mass ratio)". As a positive electrode current collector, an Al foil (thickness, 15 $\mu$m) was prepared. The slurry was applied to the surface of the positive electrode current collector to form a coating film. The resulting coating film was dried to form a positive electrode active material layer. The resulting positive electrode active material layer was pressed to produce a positive electrode.

As a negative electrode current collector, a Cu foil (thickness, 10 $\mu$m) was prepared. As a separator, a resin film (thickness, 20 $\mu$m) was prepared. The resin film had a three-layer structure (PP layer/ PE layer/PP layer). The positive electrode, the separator, and the negative electrode current collector were stacked to form a power generation element. As an exterior package, a pouch made of an Al-laminated film was prepared. The power generation element and a liquid electrolyte (electrolyte solution) were sealed into the exterior package to produce a cell.

The liquid electrolyte included the below components.

> Solvent: DME/TTE=1/2 (volume ratio)
> Solute: LiFSI (1.8 mol/L)

No. 2

A metal porous body was prepared. The metal porous body included an electrically-conductive skeleton. The metal porous body was stacked on the negative electrode current collector to produce a negative electrode. The positive electrode, the separator, and the negative electrode were stacked to form a power generation element. Except for these, in the same manner as for No. 1, a cell was produced.

No. 3

A nonwoven fabric was prepared. The nonwoven fabric was formed of cellulose fibers. The cellulose fibers were electrically insulating. The nonwoven fabric was stacked on the negative electrode current collector to produce a negative electrode. Except for this, in the same manner as for No. 2, a cell was produced.

No. 4

A polyimide porous film was prepared. The polyimide porous film included an electrically-insulating skeleton. The polyimide porous film was stacked on the negative electrode current collector to produce a negative electrode. Except for this, in the same manner as for No. 2, a cell was produced.

Nos. 5 to 11

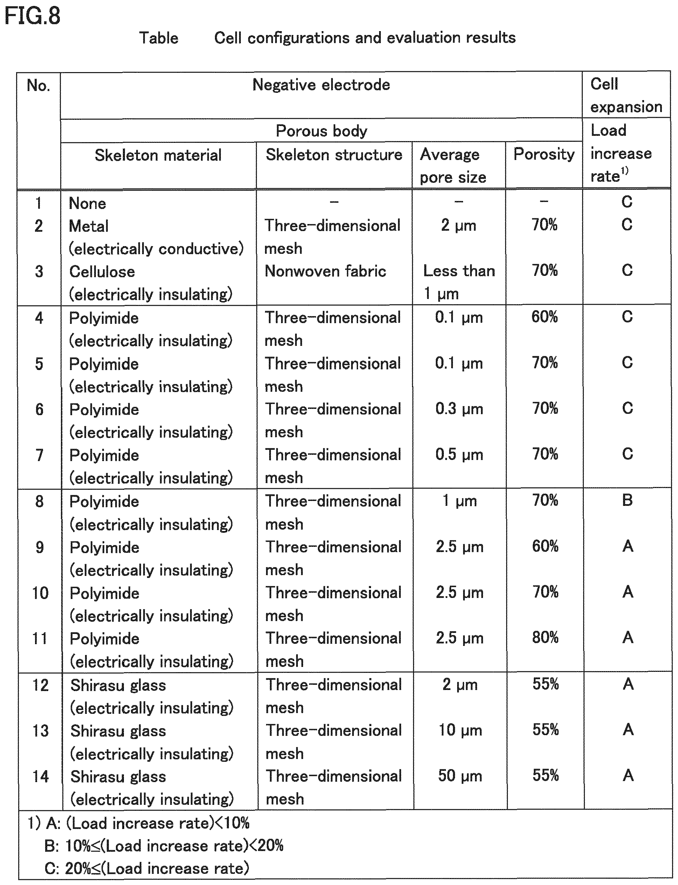

Fig. 8 is a table showing cell configurations and evaluation results. Except that the average pore size and the porosity of the polyimide film were changed, in the same manner as for No. 4, cells were produced.

No. 12

Shirasu porous glass was prepared. The skeleton of the shirasu porous glass was formed of shirasu (oxide glass). The shirasu porous glass was stacked on the negative electrode current collector to produce a negative electrode. Except for this, in the same manner as for No. 2, a cell was produced.

Nos. 13, 14

Except that the average pore size of the shirasu porous glass was changed, in the same manner as for No. 12, cells were produced.

5-2. Evaluation

On the cell, a restraint jig was mounted. The restraint jig restrains the outside of the cell. The dimensions of the restraint jig are fixed. By the restraint jig, expansion of the cell is limited. This restraining method may also be called "fixed-dimension restraining", "fixed-dimension securing", and/or the like. The restraint jig is equipped with a load cell. The load cell measures the restraining load. During charging, as the cell expands, force is applied to the restraint jig, and thereby the restraining load increases (the thickness of the cell does not substantially change).

In a charge-discharge apparatus, the cell was set. At a current density of 1 mA/cm$^2$, until the voltage of the cell reached 4.2 V, constant-current charging was carried out. By the following equation, the load increase rate was determined.

$$\text{Load increase rate } [\%] = \{(L-L_0)/L_0\} \times 100$$

L: Restraining load after charging
$L_0$: Restraining load before charging (which was "$L_0$=1.3 MPa" in the present evaluation)

In the column "Load increase rate" in the table in Fig. 8, "A" indicates a load increase rate of less than 10%. "B" indicates a load increase rate not less than 10% and less than 20%. "C" indicates a load increase rate of 20% or more. It is conceivable that the lower the load increase rate, the more reduced the expansion of the cell taking place concomitantly with Li metal deposition.

5-3. Results

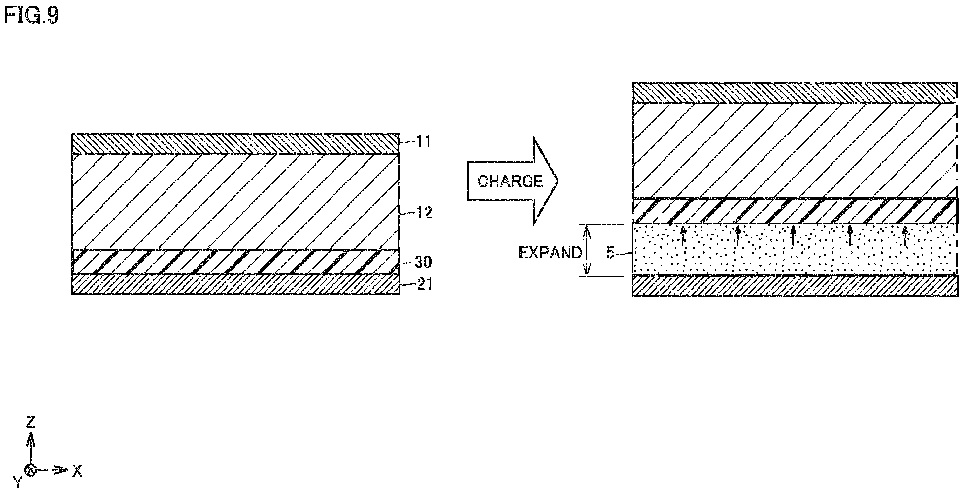

No. 1 has a high load increase rate. Fig. 9 is a conceptual view illustrating the deposition behavior of No. 1. No. 1 does not include porous body 22. As a result of charging, Li metal 5 becomes deposited on the surface of negative electrode current collector 21. It is conceivable that Li metal 5 thus deposited pushes aside the surrounding members to cause expansion of the cell.

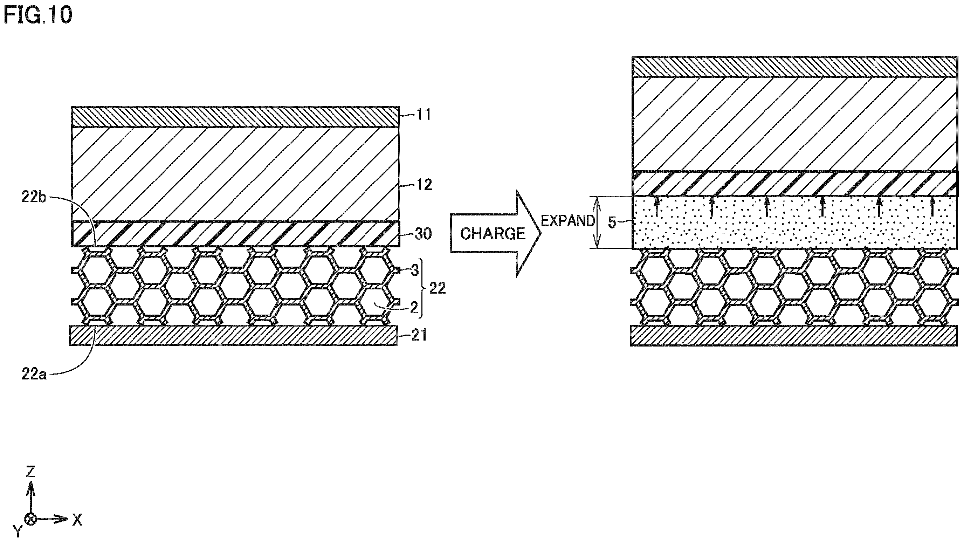

No. 2 has a high load increase rate. Fig. 10 is a conceptual view illustrating the deposition behavior of No. 2. In No. 2, porous body 22 includes an electrically-conductive skeleton 3. Deposition of Li metal 5 starts at the edge of porous body 22. Li metal 5 grows in a direction toward positive electrode 10. It is conceivable that Li metal 5 thus deposited pushes aside the surrounding members to cause expansion of the cell.

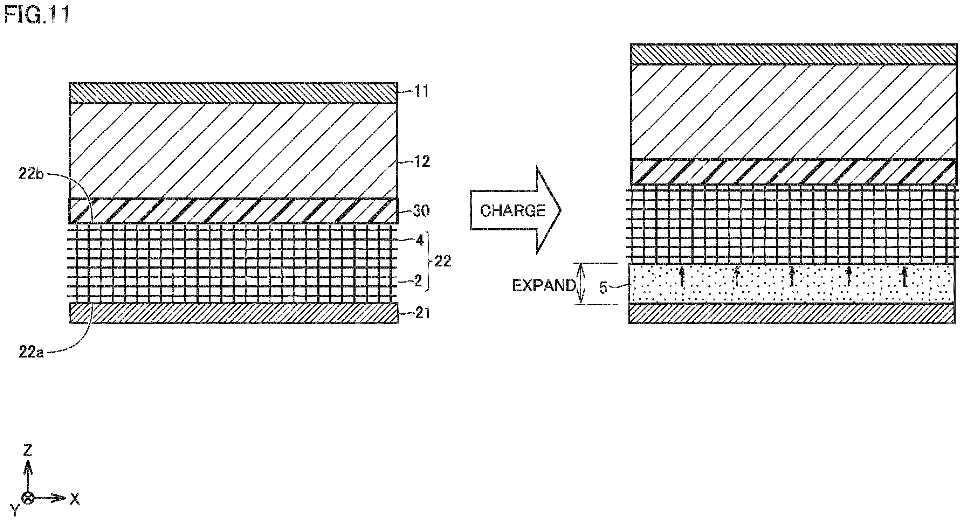

No. 3 has a high load increase rate. Fig. 11 is a conceptual view illustrating the deposition behavior of No. 3. Porous body 22 in No. 3 is a nonwoven fabric 4. As a result of charging, Li metal 5 becomes deposited on the surface of negative electrode current collector 21. Li metal 5 thus deposited cannot enter into nonwoven fabric 4 and, thereby, becomes deposited in a manner that it pushes aside the nonwoven fabric 4. It may be because Li metal 5 tends not to enter into gaps between fibers that are entangled to each other in a complex fashion.

No. 8 has a low load increase rate. The porous body in No. 8 (a polyimide porous film) includes an electrically-insulating skeleton. As a result of charging, Li metal 5 becomes deposited on the surface of negative electrode current collector 21 (see Fig. 6). Li metal 5 thus deposited enters into pores 2 of porous body 22. Li metal 5 grows inside the porous body 22. It is conceivable that even when the amount of deposited Li metal 5 increases, the contour dimensions of porous body 22 tend not to change. This may reduce the expansion of the cell.

In Nos. 4 to 11, the greater the average pore size of the porous body is, the more reduced the expansion of the cell tends to be.

**Claims**

1. A lithium metal secondary battery comprising:

> a positive electrode (10);
> a negative electrode (20); and
> an electrolyte, wherein

the negative electrode (20) includes a negative electrode current collector (21) and a porous body (22),

the porous body (22) is placed on a surface of the negative electrode current collector (21),

the porous body (22) includes an electrically-insulating skeleton (1),

the electrically-insulating skeleton (1) is contiguous in mesh form,

gaps in the electrically-insulating skeleton (1) form pores (2),

lithium ions are dissolved in the electrolyte,

a charging reaction of the negative electrode (20) is a deposition reaction of a lithium metal (5) occurring in the pores (2), and

a discharging reaction of the negative electrode (20) is a dissolution reaction of the lithium metal (5) occurring in the pores (2).

2. The lithium metal secondary battery according to claim 1, wherein the electrically-insulating skeleton (1) includes at least one selected from the group consisting of polyimide, polyamide-imide, and polyamide.

3. The lithium metal secondary battery according to claim 1, wherein the electrically-insulating skeleton (1) includes oxide glass.

4. The lithium metal secondary battery according to any one of claims 1 to 3, wherein the porous body (22) has an average pore size of 1 $\mu$m or more.

5. The lithium metal secondary battery according to claim 1, wherein the porous body (22) has a porosity from 50 to 80%.

6. The lithium metal secondary battery according to claim 1, wherein

the electrolyte includes a solvent and a solute,

the solvent includes a hydrofluoroether, and

the solute includes an imide salt.

7. A method of charging and discharging a lithium metal secondary battery, the method comprising:

(a) charging a lithium metal secondary battery (100); and

(b) discharging the lithium metal secondary battery (100), wherein

the lithium metal secondary battery (100) comprises a positive electrode (10), a negative electrode (20), and an electrolyte,

the negative electrode (20) includes a negative electrode current collector (21) and a porous body (22),

the porous body (22) is placed on a surface of the negative electrode current collector (21),

the porous body (22) includes an electrically-insulating skeleton (1),

the electrically-insulating skeleton (1) is contiguous in mesh form,

gaps in the electrically-insulating skeleton (1) form pores (2),

lithium ions are dissolved in the electrolyte,

the above (a) includes deposition of a lithium metal (5) in the pores (2), and

the above (b) includes dissolution of the lithium metal (5) present in the pores (2) into the electrolyte.

8. The method of charging and discharging a lithium metal secondary battery according to claim 7, wherein

the porous body (22) has a first main face (22a) and a second main face (22b),

the second main face (22b) is located opposite to the first main face (22a),

the first main face (22a) is in contact with the negative electrode current collector (21), and

in the above (a),

the lithium metal (5) starts to be deposited at the first main face (22a),

in a direction heading from the first main face (22a) toward the second main face (22b), sequentially from the pores close to the first main face (22a), the lithium metal (5) fills the pores (2), and

charging completes by the time when the lithium metal (5) reaches the second main face (22b).

FIG.1

# FIG.2

Table   First cell configuration

| Exterior package | | | Pouch (laminated film) <br> Prismatic case (made of metal) <br> Cylindrical case (made of metal) |
|---|---|---|---|
| Power generation element | | | Stack-type, wound-type |
| Positive electrode | Positive electrode active material | | $LiCoO_2$ <br> $LiNi_{0.6}Co_{0.2}Mn_{0.2}O_2$ <br> $LiNi_{0.7}Co_{0.1}Mn_{0.2}O_2$ <br> $LiNi_{0.8}Co_{0.1}Mn_{0.1}O_2$ |
| | Particle shape | | Solid particles, hollow particles |
| | Dopant | Constituent element | Mg, Zr, W, Al, Ti, Co |
| | Covering layer | Constituent element | B, Al, Ti, Co, W, F |
| Negative electrode | Negative electrode active material | | Natural graphite, artificial graphite <br> SiO (dopant, Mg) |
| | Multi-component system Mixing ratio (mass ratio) | | Graphite/SiO=9/1 to 8/2 (mass ratio) <br> Graphite/SiO=9/1 to 7/3 (mass ratio) <br> Graphite/SiO=9/1 to 6/4 (mass ratio) <br> Graphite/SiO=9/1 to 1/9 (mass ratio) |
| Separator | Resin film | | PE layer (monolayer structure) <br> PP layer/PE layer/PP layer <br> (three-layer structure) |
| | Inorganic particle layer | Position | Both sides <br> One side (facing positive electrode) <br> One side (facing negative electrode) |
| | | Heat-resistant material | Alumina, boehmite |
| Electrolyte (Electrolyte solution) | Solute | | $LiPF_6$, LiFSI |
| | Solvent (volume ratio) | | EC/EMC/DEC=3/7-x/x   $(0{\leq}x{\leq}7)$ <br> EC/EMC/DMC=3/7-x/x   $(0{\leq}x{\leq}7)$ <br> EC/PC/EMC/DEC=3/2/(4-x)/x   $(0{\leq}x{\leq}4)$ <br> EC/PC/EMC/DMC=3/2/(4-x)/x   $(0{\leq}x{\leq}4)$ |
| | Additive | | FB, FEC, VC |

# FIG.3

Table    Second cell configuration

| Exterior package | | | Pouch (laminated film) Prismatic case (made of metal) Cylindrical case (made of metal) |
|---|---|---|---|
| Power generation element | | | Stack-type, wound-type |
| Positive electrode | Positive electrode active material | | $LiNi_{1/3}Co_{1/3}Mn_{1/3}O_2$ $LiNi_{0.5}Co_{0.2}Mn_{0.3}O_2$ $LiNi_{0.6}Co_{0.2}Mn_{0.2}O_2$ $LiNi_{0.8}Co_{0.1}Mn_{0.1}O_2$ $LiNi_xM_{1-x}O_2$ ($0.6 \leq x < 1$, M=Co, Mn) $LiNi_xM_{1-x}O_2$ ($0.6 \leq x < 1$, M=Co, Al) $LiNi_xM_{1-x}O_2$ ($0.6 \leq x < 1$, M=Co+Mn+Al) |
| | Particle shape | | Solid particles, hollow particles |
| | Dopant | Constituent element | Not limited |
| | Covering layer | Constituent element | Not limited |
| Negative electrode | Negative electrode active material | | Graphite $Al_2O_3$-Coated graphite Si-C Composite material |
| | Multi-component system Mixing ratio (mass ratio) | | Graphite/(Si-C Composite material)=9/1 to 1/9 Graphite/(Si-C Composite material)=9/1 to 5/5 |
| Separator | Resin film | | PE layer (monolayer structure) PP layer/PE layer/PP layer (three-layer structure) |
| | Inorganic particle layer | Position | Both sides One side (facing positive electrode) One side (facing negative electrode) |
| | | Heat-resistant material | Alumina, boehmite |
| Electrolyte (Electrolyte solution) | Solute | | $LiPF_6$, $LiBF_4$ |
| | Solvent (volume ratio) | | EC/EMC=3/7 EC/DMC=3/7 EC/FEC/DEC=1/2/7 |
| | Additive | | Not limited |

# FIG.4

Table　　Third cell configuration

| Exterior package | | | Pouch (laminated film) Prismatic case (made of metal) Cylindrical case (made of metal) |
|---|---|---|---|
| Power generation element | | | Stack-type, wound-type |
| Positive electrode | Positive electrode active material | | $LiNi_xM_{1-x}O_2$ (0.3≤x<0.6, M=Co, Mn) $LiNi_xM_{1-x}O_2$ (0.6≤x<1, M=Co, Mn) $LiNi_xM_{1-x}O_2$ (0.6≤x<1, M=Co, Al) $LiNi_xM_{1-x}O_2$ (0.8≤x<1, M=Co, Al) |
| | Particle shape | | Solid particles, hollow particles |
| | Dopant | Constituent element | Zr, Mg, W, Sm, Ti, Mn, Nb, Si, Mo, Er, Mg, Al, B |
| | Covering layer | Constituent element | $Li_2CO_3$, LiOH, $WO_3$, $Al_2O_3$, $Li_3PO_4$, $TiO_2$ |
| Negative electrode | Negative electrode active material | | Carbon-based active material (natural graphite, artificial graphite), Alloy-based active material (Si,SiO), Li metal |
| Separator | Resin film | | PE layer (monolayer structure) PP layer/PE layer/PP layer (three-layer structure) |
| | Inorganic particle layer | Position | Both sides One side (facing positive electrode) One side (facing negative electrode) |
| | | Heat-resistant material | Alumina, boehmite titania, magnesia |
| Electrolyte (Electrolyte solution) | Solute | | $LiPF_6$, $LiBF_4$, LiFSI, $LiBOB^{1)}$, $LiPO_2F_2$, $FSO_3Li$, LiI, LiBr |
| | Solvent (volume ratio) | | EC/DMC/EMC (not limited in mixing ratio) EC/FEC/DMC/EMC (not limited in mixing ratio)[2] PC, DOX |
| | Additive | | FB, MA, VC, $CH_3OH$ |
| | Note | | 1) When the negative electrode active material includes Li metal, the solute may include LiBOB. <br><br> 2) When the negative electrode active material includes an alloy-based active material and Li metal, the solvent may include FEC. |

FIG.5

FIG.6

EP 4 365 974 A2

FIG.7

1000

BATTERY SYSTEM

100

CELL

200

CHARGE-
DISCHARGE
APPARATUS

CONTROL
APPARATUS

300

# FIG.8

Table    Cell configurations and evaluation results

| No. | Negative electrode | | | | Cell expansion |
| --- | --- | --- | --- | --- | --- |
| | Porous body | | | | Load increase rate[1] |
| | Skeleton material | Skeleton structure | Average pore size | Porosity | |
| 1 | None | – | – | – | C |
| 2 | Metal (electrically conductive) | Three-dimensional mesh | 2 μm | 70% | C |
| 3 | Cellulose (electrically insulating) | Nonwoven fabric | Less than 1 μm | 70% | C |
| 4 | Polyimide (electrically insulating) | Three-dimensional mesh | 0.1 μm | 60% | C |
| 5 | Polyimide (electrically insulating) | Three-dimensional mesh | 0.1 μm | 70% | C |
| 6 | Polyimide (electrically insulating) | Three-dimensional mesh | 0.3 μm | 70% | C |
| 7 | Polyimide (electrically insulating) | Three-dimensional mesh | 0.5 μm | 70% | C |
| 8 | Polyimide (electrically insulating) | Three-dimensional mesh | 1 μm | 70% | B |
| 9 | Polyimide (electrically insulating) | Three-dimensional mesh | 2.5 μm | 60% | A |
| 10 | Polyimide (electrically insulating) | Three-dimensional mesh | 2.5 μm | 70% | A |
| 11 | Polyimide (electrically insulating) | Three-dimensional mesh | 2.5 μm | 80% | A |
| 12 | Shirasu glass (electrically insulating) | Three-dimensional mesh | 2 μm | 55% | A |
| 13 | Shirasu glass (electrically insulating) | Three-dimensional mesh | 10 μm | 55% | A |
| 14 | Shirasu glass (electrically insulating) | Three-dimensional mesh | 50 μm | 55% | A |
| 1) A: (Load increase rate)<10%<br>  B: 10%≤(Load increase rate)<20%<br>  C: 20%≤(Load increase rate) | | | | | |

FIG.9

FIG.10

EP 4 365 974 A2

# FIG.11

EP 4 365 974 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022177510 A

- JP 2001250559 A